(19) Europäisches Patentamt
European Patent Office
Office européen des brevets

(11) EP 1 198 757 B1

(12) **EUROPEAN PATENT SPECIFICATION**

(45) Date of publication and mention of the grant of the patent:
**05.11.2003 Bulletin 2003/45**

(21) Application number: **00940590.3**

(22) Date of filing: **22.06.2000**

(51) Int Cl.[7]: **G06F 17/15**

(86) International application number:
**PCT/GB00/02415**

(87) International publication number:
**WO 00/079424 (28.12.2000 Gazette 2000/52)**

(54) **CORRELATION ANALYSIS IN THE PHASE DOMAIN**

KORRELATIONS-ANALYSE IM PHASENBEREICH

ANALYSE DE CORRELATION DANS LE DOMAINE DES PHASES

(84) Designated Contracting States:
**AT BE CH CY DE DK ES FI FR GB GR IE IT LI LU MC NL PT SE**

(30) Priority: **22.06.1999 GB 9914567**

(43) Date of publication of application:
**24.04.2002 Bulletin 2002/17**

(73) Proprietor: **CENTRAL RESEARCH LABORATORIES LIMITED**
**Hayes, Middlesex, UB3 1HH (GB)**

(72) Inventor: **ALCOCK, Robert, David**
**Iver, Bucks SL0 0DL (GB)**

(74) Representative: **Sharp, Alan Cooper**
**QED I.P. Services Limited,**
**Dawley Road**
**Hayes, Middlesex UB3 1HH (GB)**

(56) References cited:
**DE-A- 19 649 051**

- **BUTKUS J ET AL: "An acoustic method of determination of leakage coordinates in gas pipelines" ARCHIVES OF ACOUSTICS, 1998, POLISH SCIENTIFIC PUBLISHERS PWN, POLAND, vol. 23, no. 4, pages 533-539, XP000937572 ISSN: 0137-5075**
- **KUMAR B V K V ET AL: "An algorithm for designing phase-only filters with maximally sharp correlation peaks" ADVANCES IN OPTICAL INFORMATION PROCESSING IV, ORLANDO, FL, USA, 18-20 APRIL 1990, vol. 1296, pages 132-139, XP000912214 Proceedings of the SPIE - The International Society for Optical Engineering, 1990, USA ISSN: 0277-786X**
- **SCHWARZE H: "Computer supported measuring system for automatic control of pipe networks and leak detection" TECHNISCHES MESSEN TM, 1988, WEST GERMANY, vol. 55, no. 7-8, pages 279-285, XP000026937 ISSN: 0171-8096**
- **WANG R K ET AL: "CORRELATION FILTER WITH A NOISE ADAPTIVE DISCRIMINANT CAPABILITY" OPTIK,DE,WISSENSCHAFTLICHE VERLAG GMBH.STUTTGART, vol. 99, no. 1, 1 March 1995 (1995-03-01), pages 18-24, XP000507866 ISSN: 0030-4026**
- **PATENT ABSTRACTS OF JAPAN vol. 1999, no. 12, 29 October 1999 (1999-10-29) & JP 11 201859 A (MITSUI ENG &SHIPBUILD CO LTD), 30 July 1999 (1999-07-30)**
- **PATENT ABSTRACTS OF JAPAN vol. 1999, no. 08, 30 June 1999 (1999-06-30) & JP 11 072409 A (MITSUI ENG &SHIPBUILD CO LTD), 16 March 1999 (1999-03-16)**

EP 1 198 757 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

Printed by Jouve, 75001 PARIS (FR)

## Description

This invention relates to the detection of a common signal within two (or more) input signals using correlation based techniques, and is more specifically, although not exclusively, concerned with the detection and location of two or more electromagnetic or vibration signals, using correlation based techniques.

There are many applications in which signals are analysed using the technique of cross-correlation of two data streams. This technique is specifically useful when analysing or comparing two or more composite time sequential signals within which it is believed that there is a common signal or source of signal.

One area in which cross-correlation is used is in the analysis of water leak sounds conducted along water mains, specifically locating leaks on water mains using audio sensors. The technique involves the detection and location of a common leak sound in the signals from two listening devices. It is anticipated that the sound of a leak heard remotely at one location will contain significant similarities to the sound of the same leak heard remotely at a second location. The two audio signals are therefore likely to exhibit a peak in their cross-correlation function if there is a common source present, the position of the peak giving the time delay when the signals are similar. The peaks in the cross-correlation function can therefore be used to deduce the location of common audio signals via the velocity of the sound in the pipe and the physical surroundings of the noise source. If the nature and persistency of the sound is indicative of leaks then there is a high probability that a leak has been found and located.

The analysis techniques described herein both for the prior art methods and the present invention are also applicable in many other technical areas. These include the following: the analysis of odd mechanical noise in equipment: the assessment of quality of objects by the noise that they make while travelling along a production line; the assessment of the performance of wheeled vehicles on road or railway tracks; the analysis of road or rail surfaces by the analysis of the sound of the passage of vehicles either on a mobile platform or at a fixed location; and the measurement of closely similar recordings (the analysis of their true relationship from a high quality digital copy to a different performance of the same song that sounds very similar). Other areas where the present invention may be used include detection of moving vehicles, remote sensing and observation and detection of electromagnetic (EM) signals, especially radio frequency (RF) signals.

Correlation processing techniques are frequently performed using the following process: calculate the Fourier transform of the data sets representing two waveforms to be correlated, thereby transforming the data into the frequency domain; performing the required multiplications; and calculating the inverse Fourier transform to display the correlation function in the time domain. Often the Fast Fourier Transform (FFT) is used since this allows a considerable reduction in the processing required to generate the correlation function. These techniques are well known and generally used, FFT's, being obtained by or under control of a micro-processor or digital signal processor (DSP).

The general correlation processing techniques work well, and several devices are available to perform this task. However, when the signal to noise ratio is poor and/or the bandwidth of the signals is restricted then the cross-correlation function inevitably becomes degraded, with the peaks becoming less distinct or even hidden by noise. Thus filters are used to obtain optimum signal to noise ratio and correlation accuracy.

Noise which may be present in a signal can be considered as two distinct forms: random noise and clutter. Random noise is unpredictable on a short timescale, but has a zero mean. It may be removed by averaging over a sufficiently long period. Clutter is a function of the detected signal such as, for example, echoes and resonance, which cannot be removed by averaging.

The signal to noise ratio may be improved by filtering the input signals to reduce the bandwidth. However, as the bandwidth is reduced the width of the correlation peak tends to increase. This makes it difficult to determine the time delay when the signals are similar, and thereby makes it more difficult to determine the location of a common signal. It is therefore important to filter the signal to exclude only those bands which do not contain the useful signal. However, the prior art methods of selecting the bands are imprecise.

For example, in the case of water leak detection the audio noise signal picked up from the pipe will be a combination of the leak noise and other external or waterborne sounds. In order to improve the signal to noise ratio of the input signals the operator of a water leak detector may analyse the spectrum of the input signals to determine where signal power is significant. Filters are then set to remove the frequencies in which the signal power is not significant. This method usually provides some improvements, but does not guarantee a band with good correlation. A system operator generally needs to use a combination of experience and trial and error to improve the shape of the correlation function. This process can be time consuming, often taking tens of minutes at each leak site.

Furthermore, the spectrum of detected signals irrespective of signal type or origin.include many prominent peaks. In water detectors, this is often attributed to mechanical resonances in pipes and valve stems on which transducers are placed. The presence of a small number of dominant frequencies have the deleterious effect of broadening any correlation peaks. As the effect becomes more significant, the correlation peaks tend to become multivalued and in extreme cases oscillatory. Similar artefacts are present in RF and imaging processing systems.

One solution is to apply a frequency filter that is constructed to 'whiten' the power spectrum. However, true whitening often degraded signal-to-noise and introduced other artefacts, including a centre correlation peak. Optimisation of analysis of the spectrum of the input signals includes the steps of identifying peaks and then suppressing certain regions.

The present invention seeks to mitigate these disadvantages, and to provide an improved method of detection and location of a signal using correlation based techniques.

According to a first aspect of the invention, there is provided a method for detecting and locating a common signal within two input signals using correlation based techniques, as specified in claims 1-6.

The signals may be electromagnetic, for example Radio Frequency (RF) or Microwave, optical or they may be derived from mechanical vibrations.

The methods may include filtering for suppressing frequencies which do not exhibit a sufficient degree of coherence. The methods may also include constructing a filter for removing frequencies which do not have sufficient amplitude. The methods may further include constructing a filter for suppressing frequencies which do not exhibit steady phase progression over adjacent frequencies. The methods may yet further include constructing a filter for compensating the input signals for dispersion effects.

Preferably phase analysis is performed by comparing transformed signals derived from two of the sources, said transformed signals being resolved into real and imaginary components.

According to a further aspect of the invention, there is provided apparatus as specified in claims 7-12.

Insofar as preferred embodiments may include the features of the first aspect of the invention, they may additionally or alternatively include features of the second aspect of the invention.

Preferably the methods for performing the phase correlation and/or phase confidence algorithms are performed by a dedicated digital signal processor (DSP). Alternatively a Field Programmable Gate Array (FPGA) or Application Specific Integrated Circuit (ASIC) device may be used.

The value of the phase confidence provides an indication of the probability of a peak (ie, that arising from two cross-correlated signals) being present rather than an artefact. The fact that an analytical approach to this is achieved enables a faster and more consistent solution to be obtained.

During digital processing it was noted that echo cancellation sometimes give rise to confusing multiple cross-correlation peaks. Preferably these are removed by comparing auto-correlations of each channel. Echoes give rise to one or more peaks in the auto-correlation function of only one channel. A comparison with the second channel confirms this and the echo can be removed from the channel by subtracting an appropriately scaled and delayed version of the signal from itself.

Embodiments of the invention will now be described by way of example only, and with reference to the Figures in which:

Figures 1 to 4 show graphs of processed signals detected using two transducers;

Figures 5a to 5c are schematic block diagrams showing main features of embodiments of phase analysis algorithms;

Figures 6a and 6c show phase plots showing distribution of phase differences between two input signals;

Figure 6b shows a plot of a phase confidence function corresponding to Figure 6a;

Figure 7 is a schematic block diagram showing how a phase confidence filter is applied to improve cross-correlation;

Figure 8 is a diagrammatic view of a vehicle including a collision avoidance system;

Figure 9 is a diagrammatic view of an image stabilising system;

Figure 10 is a diagrammatic view of a vehicle including a time of flight measurement system;

Figure 11 is a diagrammatic view of a direction finding and frequency band identification system;

Figure 12 is a diagrammatic view of a system for determining signal transmission properties of an unguided signal in a medium;

Figure 13 is a diagrammatic view of a similar system to that shown in Figure 12 in which guided signals are transmitted;

Figure 14 is a diagrammatic view of a system for determining properties of a structure;

Figure 15 is a diagrammatic view of an engine management system including complex wave analysis for vibration monitoring; and

Figure 16 is a diagrammatic view of an audio/video counterfeit identification system.

A specific embodiment according to the invention is provided for the detection of leaks in water mains. The apparatus may comprise a novel correlator which is provided on a Personal Computer (PC). The novel correlator may include a suite of signal processing algorithms and a suitable Graphical User Interface. Like current correlators the novel correlator would receive its inputs from two transducers.

As explained hereinbefore, the characteristics of a correlated signal are that it has similar features in its waveform (although one may be delayed with respect to each other and the whole buried in noise and interference). The cross-correlation of two input signals will only produce a significant peak if the frequency bands which make up those input signals have a stable phase relationship with respect to each other, ie, the input signals have a narrow band coherence. Filtering of the two input signals to remove or suppress the frequencies which do not exhibit a sufficient degree of coherence will therefore enhance the peak in the cross-correlation function. Frequencies which do not exhibit sufficient coherence need not be included in the final result because they will only be contributing noise. The filter profile for the signal may therefore be determined automatically.

The final phase of algorithm development concentrates on enhancing the clarity of the cross-correlation peak. One way of achieving this is to apply a frequency filter which limits the bandwidth of the signals to include only those bands where a signal is know to exist.

Previous experience had shown that the transmission profile of a buried water pipe was highly irregular and that some prominent bands in an input spectra did not produce a significant cross-correlation peak.

The cross-correlation operation provides a convenient and robust technique for determining the most likely time delay between two signals a(t) and b(t). It produces a result, c(τ), that measures the similarity of the signals as one is delayed with respect to the other. At the most likely time delay a peak is found in the cross-correlation function. The theory of this will now be described with reference to the following equations:

The ideal result of a cross-correlation operation is a delta function at a time delay, τ. This would indicate that the signals are identical at time delay τ, and completely dissimilar at all other times. For this to be true, every component in the Fourier transform of c(τ) (denoted by C(ω) contributes equally to the cross-correlation peak and has an equal amplitude with a phase equal to:

$$\phi[\, C(\omega)\, ] = \omega\tau \qquad \text{Eqn 1.}$$

where φ[ X ] evaluates to the phase of function X, and ω is frequency. (This result is evident from inspection of the Fourier transform relationship.) The important result is that ideally the phase for a given frequency component in the Fourier transform of the cross-correlation function is directly proportional to the time delay, τ.

In signal detection applications the signal to noise ratio is such that many cross-correlations must be averaged over time obtain an acceptable signal-to-noise ratio. For the peak of the cross-correlation function to remain in the same place for each measurement, the phase of the individual components of C(ω) must also remain constant as defined by equation 1.

In practice, real measurements will deviate from equation 1. However, in bands where good signal-to-noise is achieved the relationship should be followed more closely and there should be clustering of phase measurements near the predicted values. In bands with poor signal-to-noise, the phase values would be distributed more evenly across the range from 0 to 2π.

A metric representing the stability of the phase values in C(ω) therefore gives an indication of the noise and therefore how likely each component is to contribute to a peak in the cross-correlation function. A preferred metric is the phase confidence function, and is denoted by P(ω).

Additional information about noise levels can be found by studying the mean phase of C(ω). Equation 1 predicts a linear relationship with frequency. Any measure of the deviation from this trend would therefore be useful.

The following section derives the phase confidence function and the mean phase measurement verse frequency.

The cross-correlation c(τ) of two signals a(t) and b(t) is often calculated as

$$C(\tau) = a(t) \otimes b(t)$$

$$= F^{1}(A(\omega).B(\omega')) \qquad \text{Eqn 2}$$

where:

⊗ is the cross-correlation operator;
$F^1$( .. ) is the inverse Fourier transform operation.
' is the complex conjugate operator;
and A(ω) and B(ω) are the Fourier transforms of the input signals a(t) and b(t) respectively.

The phase of a given component of the Fourier transform of c(τ), is therefore given by

$$\phi[C(\omega)] = \phi[A(\omega).B(\omega)']$$

$$= \phi[A(\omega)]-\phi[B(\omega)] \qquad \text{Eqn 3}$$

This is simply the difference in phase between components in the Fourier transform of each input signal. It provides a convenient method of calculating $\phi[C(\omega)]$.

In order to assess the distribution of these phases for a given frequency, many measurements need to be made and stored. A good measure of the distribution is the magnitude of the vector sum of the phase values. This quantity is herein referred to as the *phase confidence* and denoted it as $P(\omega)$. It is calculated as:

$$P(\omega) = \frac{1}{N}\left[\left(\sum_i \cos(\phi[C(\omega)_i])\right)^2 + \left(\sum_i \sin(\phi[C(\omega)_i])\right)^2\right]^{1/2} \qquad \text{Eqn 4}$$

where $\phi[C(\omega)_i]$ is the phase for measurement *i* of $C(\omega)$ and N is the total number of measurements.

If all the phase values for a given frequency are identical, the resultant has a magnitude of 1. If the phase measurements are randomly scattered, the resultant tends towards $1/\sqrt{N}$. This is the 'random walk' result. In general the result is somewhere between these ranges.

The phase confidence, *P(ω),* therefore gives a measure of the how likely a given frequency component contributes to a peak in the cross-correlation function of two signals.

Additional information about the input signals can be found by analysing the phase of the vector sum, which is calculated as

$$M(\omega) = \tan^{-1}\left(\frac{\sum_i \sin(\phi[C(\omega)_i])}{\sum_i \cos(\phi[C(\omega)_i])}\right). \qquad \text{Eqn 5}$$

*M(ω)* indicates the mean phase at a given frequency. In bands that give rise to a cross-correlation peak one would expect *M*(ω) to increase linearly with frequency according to equation 1. Consequently, the gradient of the *M(ω)* would be proportional to the time delay, τ.

The value of *M(*ω) is in fact complicated because it wraps around into the range from 0 to 2π. *M*(ω) must therefore be unwrapped before analysis of this type is performed.

Figure 5a shows the processes involved in calculating the metrics described in this document. In the figure, the symbol 'ϕ' at the output of a block represents a signal containing phase information. The symbol 'A' at the output of a block represents a signal containing amplitude information.

Sections of signals A and B are transformed into the frequency domain using a Fourier transform. Phase components in the Fourier transforms from each signal are subtracted to yield a phase difference value for each frequency. Transforms from many sections are evaluated to produce a set of phase difference results. (Therefore there are many phase difference measurements for each frequency.)

If all sets of results are overlaid on a single figure, the result is a phase plot of the type shown in figure 6a.

For each frequency component, a vector sum of the corresponding phase difference measurements is calculated. The result is an amplitude and phase value defined for each frequency in the transform. The phase result is equivalent to $M(\omega)$ defined in equation 5. The amplitude of the vector sum can be normalised according to the number of averages in the vector sum and is then equivalent to the phase confidence function, $P(\omega)$ defined in equation 4.

Figure 5b shows an enhancement of the basic phase analysis concept. The modification is intended to enable the vector summation process to weight individual phase difference measurements according to the amplitude information from the Fourier transform.

The form for the weighting function, Z, is defined according to a specific signal processing requirement of the application.

The normalisation process within this enhancement often takes into account each of the weighting functions for each FFT block.

An example where this enhancement may be advantageous is in applications where a temporary significant difference in the spectra of the input signals indicates the presence of an unwanted signal. In this case a suitable form for the function Z is :

$$Z(\omega) = \exp\left( -\alpha . \left| \frac{|A(\omega)|}{\left( \sum_{\omega} A(\omega)^2 \right)^{1/2}} - \frac{|B(\omega)|}{\left( \sum_{\omega} B(\omega)^2 \right)^{1/2}} \right| \right)$$

This function is intended to normalise magnitude of the spectra of each signal with respect to the mean power in that spectrum then calculate the difference between those normalised spectra. If the difference between those spectra is small at a given frequency the weighting value for that frequency will be near 1. If the difference at a given frequency is larger, the weighting function for that frequency will be reduced. The variable $\alpha$ provides a control to determine how a difference in spectra relates to the magnitude of the weighting function.

Figure 5c shows a generalised phase analysis algorithm where both the phase and amplitude contribute towards the weighting of phase difference measurements in the vector summation process.

An example where this process may be beneficial, is if the function Z implemented a process that lowered the weighting for phase difference measurements that did not follow previous trends in amplitude or phase. It could make the analysis less susceptible to unwanted signal sources such as noise and could, for example, be used in iris (or other image recognition systems).

The novel correlator includes a phase confidence filter, which is constructed to suppress the frequencies in the input signals which do not exhibit a sufficient degree of phase coherence. The phase confidence filter effectively indicates the estimation of how well a particular frequency will correlate, and is the result of analysing the phase stability between the input signals. One possible method for constructing the phase confidence filter would be first to calculate a phase confidence function using the following steps: to calculate the complex component of the Fourier transform for each of a number of sections of the two input signals; to calculate the average vector sum of the phase difference between the two input signals for each frequency; and then to calculate the magnitude of the vector sum and normalise the result. Thus a function is provided which has a value of 1.0 for a given frequency which shows perfect coherence, and tends to $1/\sqrt{N}$ if the phase differences for a given frequency are random, where n is the number of samples taken. The phase confidence function may then be used as an optimal frequency weighting function to construct a filter which will include only those frequencies which contribute usefully to the cross-correlation of the input signals.

The phase confidence filter is used in combination with one or more band pass filter. The or each band filter is based in software and has characteristics which are a function of the amplitude of the input signals. The or each filter is designed to select frequencies of large amplitude, which are likely to be prominent in the cross-correlation, and by reducing the bandwidth to improve the signal to noise ratio. This filter may be constructed by applying a digital threshold to the product of the spectra of the input signals. The threshold may be configurable by the user. The phase confidence filter and the automatic band filter are applied separately to the data.

The use of the automatic band filter addresses one practical disadvantage of the phase confidence filter. This is that some of the noise in the input signals can have highly correlated noise as a result of imperfect digitisation, this effect, seen usually at high frequencies, can produce a substantial phase confidence measurement. The automatic band filter suppresses frequencies where the signal to noise ratio is poor and this artefact is most likely to be seen.

The effect of using the phase confidence filter in combination with the automatic band filter is shown in Figures 1 to 4. Figures 1 and 2 show first input signals 1 and a second input signal 2 respectively, both in the frequency domain. The cross-correlation function 7 for the unfiltered first and second signals is shown in Figure 3. Phase confidence filter 3 and the automatic band filter 4 are constructed for the first and second signals and applied to the signals in the frequency domain to produce a filtered first signal 5 and a filtered second signal 6. The cross-correlation function 8 for the filtered first and second signals is shown in Figure 4. The improvement between the cross-correlation functions 7 and 8 can clearly be seen. There is improved clarity, with reduced background level and less ambiguous peak location.

If the common features in the input signals contain some degree of time dependency, then the phase relationship will not be stable. The use of the phase confidence filter calculated using the method above may blur the results. An alternative method for calculating the phase confidence filter would be to consider the phases for each individual section of the input signals. The process could then adapt if the phase appeared to be stable to lengthen the average by including further sections to improve the estimate.

This method could also be adapted to track the signals if they were time dependent, for example, frequency-hopping radios. Consider, for example, a signal which is very noisy but has a particular value which may be either constant or changing over time. If this value is constant then it is possible to average the signal to produce the value accurately. However, if the value is changing then a compromise must be made between the number of samples over which the signal is averaged, and the rate at which the value is varying.

If to a first approximation this variation is linear it is relatively straightforward to produce a root mean square best straight line fit that continually updates as the data comes in. If the variation is non-linear then some means must be found of releasing the linear constraint but still producing a good curve fit. If the calculation process also produces two alternative straight line fits, one based on the first half of the data, and the other based on the second half of the data (they could be updated every other data point to ensure an even number of points) if the two lines show coherent deviation above some threshold a track deviation can be initiated. Thereby, an adaptive signal tracking process may be developed.

The novel correlator also includes a filter based on a consideration of the phase relationships between adjacent frequencies of the input signals. The phase differences may exhibit a steady progression of phase over the range of frequencies which are coherent. The source of this result can be visualised by considering a single correlation peak, a peak in the time domain is created by frequencies adding up in phase in the frequency domain. Consider firstly a centre correlation peak (often the result of an instrumental artefact or interfering signal) which is located in the centre of the correlation range and which corresponds to correlation where there is zero relative delay between two input signals. In this case the frequencies have the same or very similar phase, and therefore the phase does not change with frequency. A centre correlation peak may be removed by constructing a filter to remove frequencies having the same phase.

If the correlation peak represents a delay between the input signals then adjacent frequencies are shifted in phase by an amount defined by the phase shift caused by the delay acting on the frequency difference. Frequencies evenly spaced in a Fourier Transform will exhibit a linear change of phase between adjacent correlated phases.

Considering the phases of sequential frequencies can have the advantage when the propagation bandwidth is very narrow resulting in a broad correlation peak because the phase progression can be "unwrapped" and a straight line fitted to it.

The existence of a second major peak in the correlation result will add a second linear progression to the phase pattern. The two phase progressions will add as vectors with the result that as the relative phases of the two linear progressions move in and out of phase the main peak will be advanced and retarded in phase giving a ripple in the phase results.

Alternatively, the case where the velocity of the signal is frequency dependent may be utilised. In this case the phase progression for adjacent frequencies in a single correlation peak will not be linear. This non-linearity may be tracked. This will allow either the compensation of results for dispersion where the correlation is spread by its effects or the identification and measurement of the dispersion effects using known signal sources.Two metrics have been introduced that enable an assessment to be made of the significance of the contribution from a specific frequency band to a peak in a cross-correlation function. The properties of these metrics are described below.

The relationship between the phase measurements, the phase confidence and the mean phase function are shown graphically in the phase plots shown in Figure 6a to 6c shows a scatter chart where each phase measurement for each frequency is plotted as a single point. Regions where phase measurements are more likely show up as darker regions or bands in this plot.

From inspection there appear to be three regions where this might be occurring:

Region 1: From about 500 Hz to 1000 Hz
Region 2: From about 2500 Hz to 3500 Hz
Region 3: Above about 6000 Hz

Figure 6b shows the corresponding phase confidence function. It is reasonable to expect the phase confidence function to have larger values for regions where there is a stable (i.e, preferred) phase value.

In region 3 of Figure 6a it is apparent that the phase values tends to cluster near values of 0, $\pi$ and $2\pi$. This is indicative of digitisation noise in the acquisition instrument. Because these clusters have opposite phases the results cancel in the vector summation to give a net result of zero. For this reason the phase confidence value is near zero.

In region 2 there is a distinct cluster visible in Figure 6a with a phase equal to about 5.5 across the band. Since the phase is constant, the gradient of the phase is zero. This indicates that the band probably corresponds to a correlation peak with a time delay of zero. This is a centre correlation. Means may be provided to identify this region automatically and thereby predict the exact location of a peak.

Region 1 is more interesting. From Figure 6a it is not clear that a preferred phase value exists. However, the phase confidence function in Figure 6b indicates that there is clearly a preferred phase value. In Figure 6c the frequency scale of Figure 6b has been expanded to reveal significant structure.

The structure exhibits a saw-tooth characteristic where the most likely phase value increases linearly with frequency. (The discontinuities are caused because the phase value always wraps around into the range 0 to $2\pi$.) The linear relationship is predicted in equation 1. A consequence is that the gradient of the structure is directly proportional to the time delay between the signals.

If the mean phase function, $M(\omega)$, were superimposed upon this chart it would follow the position of the peaks of the clusters at each frequency bin.

An analysis of $M(\omega)$ therefore gives an alternative method for calculating the time delay, $\tau$ between the input signals. In practice though, this is far more difficult than identifying the position of a peak in the cross-correlation. There is one occasion, however, where this option becomes invaluable. That is when two more distinct frequency bands in the signal produce different cross-correlation peaks. Analysis of $M(\omega)$ then enables the frequency band to be attributed to a particular peak.

$M(\omega)$ is particularly interesting if its gradient varies with frequency. In this case it indicates the presence of dispersion. An algorithm which uses $M(\omega)$ to modify phases of signals to synthesise a result that is free from dispersion.

Phase analysis algorithms produce metrics that give a valuable insight into the properties of cross-correlation signals. The following section describes how the metrics can be used to select frequency bands of interest in correlation applications.

The phase confidence function gives a measure of how likely it is that each frequency component in the FFT of two input signals contributes to a peak in their cross-correlation function. This information can easily be used to generate a filter which enhances useful bands in input signals, increasing the signal to noise ratio in a cross-correlation measurement.

There a many possible techniques for converting the phase confidence metric into a filter function with these properties. A simple method is to scale and shift the phase confidence value so that its maximum is mapped to 1.0 and the value $1/\sqrt{N}$ is mapped to zero. Equation 6 creates a function $H(\omega)$ that performs this operation.

$$G(\omega)=\frac{P(\omega)-\frac{1}{\sqrt{N}}}{\max(P(\omega))-\frac{1}{\sqrt{N}}} \qquad \text{Eqn 6}$$

$$H(\omega)=\begin{cases}G(\omega) & G(\omega)\geq 0\\ 0 & G(\omega)<0\end{cases}$$

Where max (X) evaluates a maximum value of function X, $N$ is the number of phase measurements and $G(\omega)$ is an intermediate result. An enhanced cross-correlation result is now achieved by applying filter function $H(\omega)$, to the input signals.

Figures 5a to 5c show the effect of applying a filter that is based on the phase confidence function to a cross-correlation function in a signal detection application.

Figure 5a shows the original cross-correlation function. It shows a peak near 15 ms.

Figure 5b shows the spectra of the left and right input channels with the phase correlation filter. An interesting point to note is that the phase confidence filter does not follow all the trends in the spectra of the input signals. A distinct difference is visible in the right channel where the peaks in the spectra below 300 Hz are clearly suppressed by the filter.

Figure 5c shows the cross-correlation function after the application of the filter. The output correlation function has been enhanced in several respects;

- The peak is more distinct.
- The artefacts are less significant.
- The background noise level is reduced.

These would give an operator sufficient confidence to flag the location of signal source.

Figure 6 shows a block diagram illustrating a method for enhancing the result of a cross-correlation of two signals A and B. The input signal A and B (denoted by modules 1 and 2) are passed to a signal processing unit 3 which implements the phase analysis algorithms. The processing unit generates a phase confidence filter 4 which is applied to the input signals A and B before applying the cross-correlation operation, denoted by module 5.

An embodiment giving an equivalent result 6 would be to apply the phase confidence filter 4 after the calculation of the cross-correlation function 5. An example of an algorithm for performing this is shown diagrammatically in Figure 7.

The phase confidence function is a measure of how likely each frequency component contributes towards a cross-correlation peak. It is therefore useful to use it to construct a filter (called a phase confidence filter) to select frequency bands which contribute to the cross-correlation peak and reject others. The effect of applying this filter to the signals is that the signal to noise level of the cross-correlation peak can be increased.

Further improvements can often be made to the clarity of the cross-correlation peak by using the phase confidence filter in combination with a 'spectrum whitening' algorithm.

There is now described embodiments in which the invention may be used to enhance performance.

Referring to Figure 8, there is shown diagrammatically an automobile 10, having fitted thereon transducer 12 and sensor 14. Phase analysis algorithms are applied to the received signals and used to implement a collision avoidance system.

Vehicle 10 is fitted with a radar based collision avoidance system 16. The collision avoidance system 16 includes a signal generator 18 which generates a signal which is emitted from a transducer 12. Scattered signal from an object (not shown) external to the vehicle is detected by a sensor 14. A processing unit 15 compares the transmitted and detected signals using a cross-correlation based algorithm as herein described.

If the processing unit 15 applies the phase analysis algorithms, it improves the signal to noise level of the cross-correlation peak. This yields more accurate time delay measurement and/or enables a lower power transmitter and/or less sensitive detector to be used.

Figure 9 shows how the phase analysis algorithm is applied to image stabilisation instrumentation.

Figure 9 shows a camera 20 mounted firmly on a body 22 that is able to move with respect to object 24 in the field of view of the camera 20. The ability of the body 22 to move with respect to the camera's field of view is represented by a spring 26.

If the camera 22 is able to move with respect to the object 24 in its field of view, the image that is recorded will be seen to translate across the field of view. The correction of this translation is called image stabilisation.

Image stabilisation works by calculating the position of one image with respect to another image of the same scene a short time previously. The newer image is then translated according to the measured offset.

The primary mathematical operation used to calculate relative position of the images is cross-correlation. The phase analysis techniques offer enhancements in the processing of these signals by identifying spatial frequencies in the images that give rise to peaks in the image cross-correlation function.

The phase confidence function enables a filter to be defined that increases the signal to noise level in the cross-correlation function and enables the position of the peak to be identified with greater precision.

Figure 10 shows diagrammatically how phase analysis algorithms could be applied to 'time of flight' measurements. In 'time of flight' measurements it is necessary to measure the time delay between two signals. A common configuration for such a measurement is illustrated. Figure 10 shows a vehicle 30 containing a processing unit 32, analysing signals from a pair of detectors 34 and 36. The detectors 34 and 36 measure variation in reflected electromagnetic radiation as the vehicle 30 moves across a road surface 38. An equivalent configuration has stationary detectors analysing a moving object. The detectors 34 and 36 may be active or passive.

By measuring the time delay between fluctuations measured at the detectors 34 and 36, the velocity of the vehicle 30 with respect to the road can be determined. The cross-correlation operation is commonly used in these types of measurements. The phase analysis algorithms provide a technique for creating filters that enable the best cross-correlation results to be generated.

Other examples of 'time of flight' measurements are fluid flow measurements, blood flow measurements and speed of sound measurements.

Figure 11 shows diagrammatically how phase analysis algorithms are applied to direction finding instrumentation. Figure 11 shows two signal sources 40 and 41, transmitting from locations 42 and 43 respectively.

At a third location 44, a broad band detector array 45 receives these signals and passes them to a signal processing unit 46. The detector array 45 is shown includes three signal receivers 46, 47 and 48 arranged in a triangular configuration. Locations 42 and 43 are unknown to personnel at location 44.

By implementing phase analysis algorithms on any pairs of received signals from the detector array 45, and with a knowledge of the configuration of the detector array 45, the signal processing unit is able to determine the direction of locations 42 and 43 with respect to the detector array 45.

A signal that is common to a pair of detectors in the detector array produces a peak in their cross-correlation function. The time delay associated with a cross-correlation peak indicates the direction of the source with respect to the detectors. To unambiguously locate the source, at least 3 detectors, arranged in a triangle, must be used.

The phase analysis algorithms, as herein described, enable the processing of these signals to be improved. The phase confidence function indicates the bands that give rise to a correlation peak. Therefore signals may be filtered optimally to remove bands associated with noise, which may be uncorrelated noise.

If more than one signal source exists and there are located at positions that give rise to a different time delay for any given pair of detectors, an analysis of the mean phase function enables the frequency bands associated with one source to be discriminated from frequency bands associated with another source. The phase confidence function provides a good measure of the frequency bands where the mean phase value should be analysed. Phase analysis algorithms therefore enable both direction and the frequency band of a given source to be determined.

Figure 12 illustrates, diagrammatically, how phase analysis algorithms are used to characterise transmission properties of a media.

A signal generated by signal source 50 is transmitted via transmitter 51. Signal 51 is received by a receiver 52 then fed into a processing unit 53. The signal generated by source 50 is also fed directly into processing unit 53 via a lossless link 54. (A digital representation of the signal may be suited for this, transfer.).

The processor unit 53 applies phase processing algorithm to produce a phase confidence plot and a mean phase plot.

If the signal produced by source 50 covers a given frequency bandwidth B, the phase confidence function indicates the quality of the transmission between transmitter 51 and receiver 52 in the bandwidth B.

Analysis of mean phase yields the time of flight of the signal between the transmistter 51 and the receiver 52 in the bandwidth B. This enables dispersion artefacts to be identified and measured.

The technique could be applied in applications where it is important to know the transmisstion band of highest quality and therefore would enable equipment to automatically minimise the power required to transmit a signal though a medium by selecting a particular band with the highest signal to noise ratio.

Figure 13 illustrates a similar embodiment to that shown in Figure 12 except that a waveguide such as an optical fibre acts as a transmission medium.

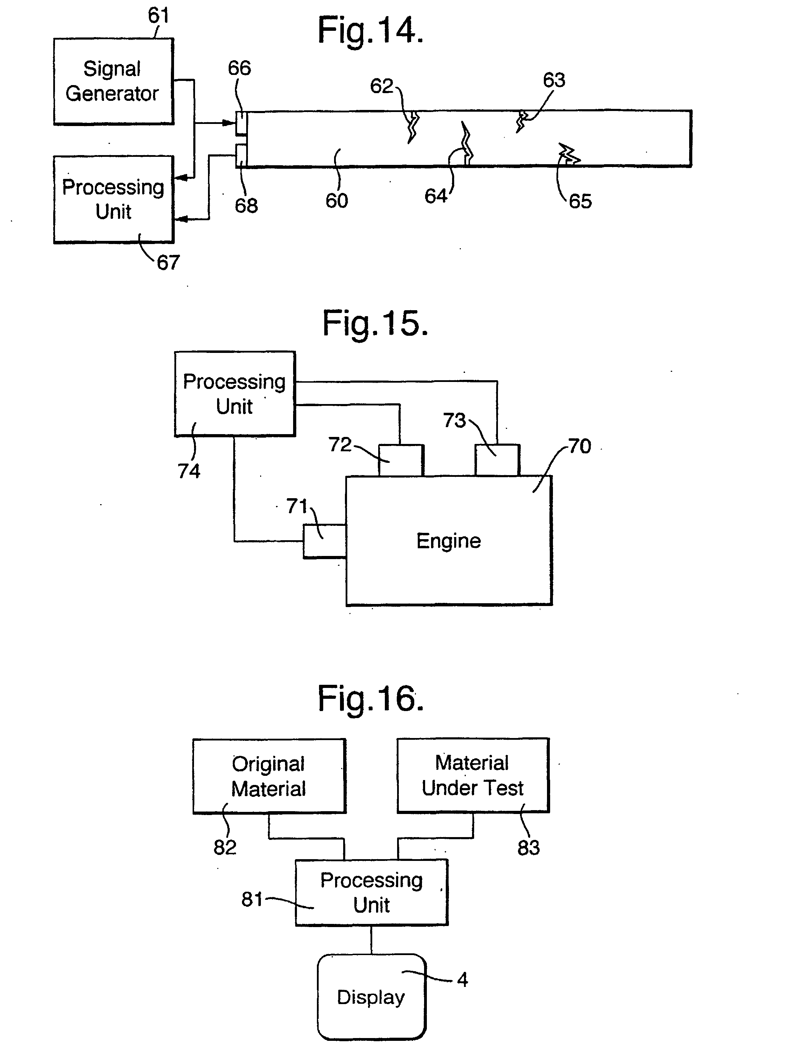

Figure 14 shows an example of a structural test or analysis apparatus. Structure 60 is under test. The structure 60 contains a number of imperfections 62, 63, 64 and 65. A signal generator 61 produces a signal that is introduced into the structure via a transducer 66. A signal processing unit 67 monitors the signals in the structure 60 via transducer 66 and compares the response to the signal introduced into the structure 60. In addition to the original signal emitted by transducer 66, the processing unit 67 detects echoes and other distorted versions of the signal. Analysis of the detected signal enables the location of structural defects 62, 63, 64 and 65 to be detected.

A common analytical technique used within this process is the cross-correlation operation which can be used to determine the time delay associated with echoes of the original signal. The phase analysis algorithms enhance this analysis by increasing the signal to noise ratio of any cross-correlation peak thereby improving the accuracy with which the time delays can be identified.

If the defects 2, 3, 4 and 5 have different frequency characteristics, the phase analysis algorithms enable their characteristics to be distinguished.

Figure 15 shows an engine 70 with a number of sensors 71 to 73 for detecting vibrations made by the engine. Output of the sensors 71 to 73 are fed to a signal processing unit 74.

Analysis of the signals using phase analysis algorithms enable vibrations made by different components of the engine to be analysed. An example of the type of vibration is the characteristic frequencies of worn bearing surfaces.

Figure 16 shows an audio/video counterfeit identification system 80. A signal processing unit 81 compares signals representing the original audio-video material 82 and a suspected counterfeit audio-video material 83. The results of the analysis are displayed to an operator.

Phase analysis algorithms offer advantages over existing techniques throughout the comparison process.

These include audio/video signals must be aligned during analysis so that similar portions of signals are compared with each other. A cross-correlation process is commonly used for this procedure. By applying the phase analysis algorithms this process can be improved.

The phase confidence filter gives a measure of the similarity of the two signals as a function of frequency. If one or more tracks in two input tracks are substantially similar, the phase confidence value is likely to be significant over a large portion of the frequency spectra of the input signals. This process is superior to a direct comparison of the spectra because, in the phase analysis procedure, dissimilar components of the input signals have a mean contribution tending towards $1/\sqrt{N}$ (where N is the number of components in the summation). No such reduction in contribution is observed when comparing spectra directly.

A consequence is that the application of the phase analysis algorithms yields a more accurate and reliable measure of similarity or dissimilarity between the two audio-video signals.

The invention has been described by way of examples only and it will be appreciated that variation to the embodiments may be made without departing from the scope of the invention.

## Claims

**1.** A computer implemented method of determining the location of the source of a common signal being detected in two input signals which are provided by two signal detectors, comprising:

a. a first step of providing at least one filter for

a1. analysing the phase of the frequency components of the input signals in the frequency domain, and for

a2. filtering the input signals in the frequency domain, and for

a3. performing cross-correlation of the filtered signals;

b. a second step of providing a first filter within said at least one filter for suppressing the frequencies in the input signals which do not exhibit a sufficient degree of phase coherence, the second step being **characterized by**

b1. selecting at least one corresponding section of each of the two input signals, and by

b2. transforming the selected section of each of the input signals into the frequency domain by calculating a Fourier Transform, and by

b3. subtracting for the selected section of each of the input signals for each frequency component in the Fourier transforms of the input signals the phase components from one another so as to yield a phase difference value for each frequency component, and by

b4. calculating for each frequency component for all selected sections a vector sum of the corresponding phase difference values, and by

b5. calculating the magnitude of said vector sum for each frequency component, so as to provide a measure of how likely a given frequency component contributes to a peak in the cross-correlation function of the two input signals.

**2.** A method according to claim 1, wherein the signals are electromagnetic signals.

**3.** A method according to any preceding claim comprising a third step of providing a second filter within the at least one filter for removing frequencies which do not have sufficient amplitude.

**4.** A method according to claim 3, wherein the third step is constructed using a method comprising: applying a digital threshold to the product of the spectra of the two input signals.

**5.** A method according to any preceding claim, comprising a fourth step of providing a third filter within the at least one filter for suppressing frequencies which do not exhibit steady phase progression over adjacent frequencies.

**6.** A method according to any preceding claim, comprising a fifth step of providing a fourth filter within the at least one filter for compensating the input signals for dispersion effects.

**7.** An apparatus for determining the location of the source of a common signal being detected in two input signals which are provided by two signal detectors, comprising a computer including:

a. first means for providing at least one filter comprising means for

a1. analysing the phase of the frequency components of the input signals in the frequency domain, and for

a2. filtering the input signals in the frequency domain, and for

a3. performing cross-correlation of the filtered signals;

b. second means for providing a first filter within said at least one filter for suppressing the frequencies in the input signals which do not exhibit a sufficient degree of phase coherence, the second means being **characterized by**

b1. means for selecting at least one corresponding section of each of the two input signals, and by

b2. means for transforming the selected section of each of the input signals into the frequency domain by calculating a Fourier Transform, and by

b3. means for subtracting for the selected section of each of the input signals for each frequency component in the Fourier transforms of the input signals the phase components from one another so as to yield a phase difference value for each frequency component, and by

b4. means for calculating for each frequency component for all selected sections a vector sum of the corresponding phase difference values, and by

b5. means for calculating the magnitude of said vector sum for each frequency component, so as to provide a measure of how likely a given frequency component contributes to a peak in the cross-correlation function of the two input signals.

**8.** Apparatus according to claim 7, wherein the signals are electromagnetic signals.

**9.** Apparatus according to claims 7 or 8, wherein the at least one filter includes a second filter for removing frequencies which do not have sufficient amplitude.

**10.** Apparatus according to claim 9, wherein the second filter is constructed using a method comprising: applying a digital threshold to the product of the spectra of the two input signals.

**11.** Apparatus according to any of claims 7 to 10, wherein the at least one filter includes a third filter for suppressing frequencies which do not exhibit steady phase progression over adjacent frequencies.

**12.** Apparatus according to any of claims 7 to 11, wherein the at least one filter includes a fourth filter for compensating the input signals for dispersion effects.

**13.** A method for generating a frequency filter according to claim 10 where said filter identifies regions in the frequency spectrum of a cross-correlation function that is likely to exhibit a correlated phase between adjacent frequencies in its Fourier transform.

**14.** A method for calculating the time delay between two input signals by tracking the phase difference between the signals as a function of frequency, utilising the filter according to claim 10.

**15.** A method for calculating variations in time delay between two signals as a function of frequency utilising techniques described in claims 13 and 14.

**16.** A vehicle including the apparatus according to any of claims 7 to 12.

**17.** A craft including the apparatus according to any of claims 7 to 12.

**18.** An arrangement for determining signal transmission properties in a medium including the apparatus according to any of claims 7 to 12.

**19.** An engine including the apparatus according to any of claims 7 to 12.

**20.** A image identification system including the apparatus according to any of claims 7 to 12.

**21.** Apparatus for detecting and locating leaks in a fluid carrying pipe comprising the apparatus as claimed in any one of claims 7 - 12.

**Patentansprüche**

**1.** Computer-implementiertes Verfahren zum Bestimmen des Ortes der Quelle eines gemeinsamen Signals, das in zwei Eingangssignalen festgestellt wird, die von zwei Signal-Detektoren erfasst werden, umfassend die folgenden Schritte:

a. einen ersten Schritt des Vorsehens wenigstens eines Filters zum

a1. Analysieren der Phase der Frequenz-Komponenten des Eingangssignals im Frequenzbereich und zum
a2. Filtern des Eingangssignals im Frequenzbereich und zum
a3. Durchführen einer Kreuzkorrelation des gefilterten Signals

b. einen zweiten Schritt des Vorsehens eines ersten Filters innerhalb des wenigstens einen Filters zum Unterdrücken der Frequenzen in den Eingangssignalen, welche keine signifikante Phasenkorrelation aufweisen, wobei der zweite Schritt **gekennzeichnet ist, durch**

b1 Selektieren wenigstens eines korrespondierenden Abschnitts jedes der beiden Eingangssignale, sowie **durch**
b2. Transformieren des selektierten Abschnitts jedes der beiden Eingangssignale in den Frequenzbereich **durch** Berechnen einer Fourier-Transformation, sowie **durch**
b3. Subtrahieren, für den selektierten Abschnitts jedes der Eingangssignale, für jede Frequenzkomponente in den Fourier-Tranformationen der Eingangssignale, der Phasenkomponenten voneinander, so dass man einen Phasendifferenzwert für jede Frequenzkomponente erhält, sowie **durch**
b4. Berechnen, für jede Frequenzkomponente für alle selektierten Abschnitte, einer Vektorsumme der korrespondierenden Phasendifferentwerte, sowie **durch**
b5. Berechnen der Größe der Vektorsumme für jede Frequenzkomponente, um so ein Maß dafür zu erhalten, wie wahrscheinlich eine bestimmte Frequenzkomponente zu einem Spitzenwert in der Kreuzkorrelations-Funktion der beiden Eingangssignale beiträgt.

**2.** Verfahren nach Anspruch 1, wobei die Signale elektromagnetische Signale sind.

**3.** Verfahren nach einem der vorstehenden Ansprüche, umfassend einen dritten Schritt des Vorsehens eines zweiten Filters innerhalb des wenigstens einen Filters zum Entfernen von Frequenzen, welche keine ausreichende Amplitude besitzen.

**4.** Verfahren nach Anspruch 3, wobei der dritte Schritt mittels eines Verfahrens realisiert wird, bei dem auf das Produkt der Spektren der beiden Eingangssignale ein digitaler Schwellwert angewandt wird.

**5.** Verfahren nach einem der vorstehenden Ansprüche umfassend einen vierten Schritt des Vorsehens eines dritten Filters innerhalb des wenigstens einen Filters zum Unterdrücken von Frequenzen, welche keine gleichmäßige Phasenprogression über benachbarte Frequenzen hinweg aufweisen.

**6.** Verfahren nach einem der vorstehenden Ansprüche umfassend einen fünften Schritt des Vorsehens eines vierten Filters innerhalb des wenigstens einen Filters zum Kompensieren der Eingangssignale in Bezug auf Dispersionseffekte.

**7.** Vorrichtung zum Bestimmen des Ortes der Quelle eines gemeinsamen Signals, das in zwei Eingangssignalen festgestellt wird, die von zwei Signal-Detektoren erfasst werden, umfassend einen Computer mit:

a. ersten Mitteln zum Vorsehen wenigstens eines Filters zum

a1. Analysieren der Phase der Frequenz-Komponenten des Eingangssignals im Frequenzbereich und zum
a2. Filtern des Eingangssignals im Frequenzbereich und zum
a3. Durchführen einer Kreuzkorrelation des gefilterten Signals

b. zweite Mittel zum Vorsehen eines ersten Filters innerhalb des wenigstens einen Filters zum Unterdrücken der Frequenzen in den Eingangssignalen, welche keine signifikante Phasenkorrelation aufweisen, wobei die zweiten Mittel **gekennzeichnet sind, durch**

b1. Mittel zum Selektieren wenigstens eines korrespondierenden Abschnitts jedes der beiden Eingangssignale, sowie **durch**
b2. Mittel zum Transformieren des selektierten Abschnitts jedes der beiden Eingangssignale in den Frequenzbereich **durch** Berechnen einer Fourier-Transformation, sowie **durch**
b3. Mittel zum Subtrahieren, für den selektierten Abschnitts jedes der Eingangssignale, für jede Frequenzkomponente in den Fourier-Tranformationen der Eingangssignale, der Phasenkomponenten voneinander, so dass man einen Phasendifferenzwert für jede Frequenzkomponente erhält, sowie **durch**
b4. Mittel zum Berechnen, für jede Frequenzkomponente für alle selektierten Abschnitte, einer Vektorsumme der korrespondierenden Phasendifferentwerte, sowie **durch**
b5. Mittel zum Berechnen der Größe der Vektorsumme für jede Frequenzkomponente, um so ein Maß dafür zu erhalten, wie wahrscheinlich eine bestimmte Frequenzkomponente zu einem Spitzenwert in der Kreuzkorrelations-Funktion der beiden Eingangssignale beiträgt.

**8.** Vorrichtung nach Anspruch 7, wobei die Signale elektromagnetische Signale sind.

**9.** Vorrichtung nach einem der Ansprüche 7 oder 8, wobei das wenigstens eine Filter ein zweites Filter beinhaltet, zum Entfernen von Frequenzen, welche keine ausreichende Amplitude besitzen.

**10.** Vorrichtung nach Anspruch 9, wobei das zweite Filter mittels eines Verfahrens realisiert wird, bei dem auf das Produkt der Spektren der beiden Eingangssignale ein digitaler Schwellwert angewandt wird.

**11.** Vorrichtung nach einem der Ansprüche 7 bis 10, wobei das wenigstens eine Filter ein drittes Filter beinhaltet, zum Unterdrücken von Frequenzen, welche keine gleichmäßige Phasenprogression über benachbarte Frequenzen hinweg aufweisen.

**12.** Vorrichtung nach einem beliebigen der Ansprüche 7 bis 11, wobei das wenigstens eine Filter ein viertes Filter beinhaltet, zum Kompensieren der Eingangssignale in Bezug auf Dispersionseffekte.

**13.** Verfahren zum Erzeugen eines Frequenzfilters nach Anspruch 10, wobei das Filter Regionen im Frequenzspektrum einer Kreuzkorrelationsfunktion identifiziert, die wahrscheinlich eine korrelierte Phase zwischen benachbarten Frequenzen in ihrer Fourier-Transformation aufweisen.

**14.** Verfahren zum Berechnen der zeitlichen Verzögerung zwischen zwei Eingangssignalen durch Verfolgen der Phasendifferenz zwischen den Signalen in Abhängigkeit von der Frequenz, mittels des Filters nach Anspruch 1 bis 6.

**15.** Verfahren zum Berechnen von Variationen in der zeitlichen Verzögerung zwischen zwei Signalen in Abhängigkeit von der Frequenz, mittels der in Ansprüchen 13 und 14 beschriebenen Techniken.

**16.** Landfahrzeug, beinhaltend die Vorrichtung nach einem der Ansprüche 7 bis 12.

**17.** Fahrzeug, beinhaltend die Vorrichtung nach einem der Ansprüche 7 bis 12.

**18.** Anordnung zum Bestimmen von Signalübertragungs-Eigenschaften in einem Medium, beinhaltend die Vorrichtung nach einem der Ansprüche 7 bis 12.

**19.** Maschine, beinhaltend die Vorrichtung nach einem der Ansprüche 7 bis 12.

**20.** Bild-Identifikations-System, beinhaltend die Vorrichtung nach einem der Ansprüche 7 bis 12.

**21.** Vorrichtung zum Erkennen und Lokalisieren von Lecks in einem ein Fluid transportierenden Rohr, umfassend die in einem der Ansprüche 7 bis 12 beanspruchte Vorrichtung.

**Revendications**

**1.** Procédé mis on oeuvre par ordinateur pour déterminer l'emplacement de la source d'un signal commun détecté dans deux signaux d'entrée qui sont fournis par deux détecteurs de signaux, comprenant :

a une première étape de fourniture d'au moins un filtre pour

a1. analyser la phase des composants de fréquence des signaux d'entrée dans le domaine de fréquence, et pour
a2. filtrer les signaux d'entrée dans le domaine de fréquence, et pour
a3. effectuer une corrélation croisée des signaux filtrés ;

b. une deuxième étape de fourniture d'un premier filtre dans ledit au moins un filtre pour supprimer les fréquences dans les signaux d'entrée qui ne démontrent pas un degré suffisant de cohérence de phase, la deuxième étape étant **caractérisée par**

b1. la sélection d'au moins une section correspondante de chacun des deux signaux d'entrée, et par
b2. la transformation de la section sélectionnée de chacun des signaux d'entrée en domaine de fréquence en calculant une transformée de Fourier, et par
b3. la soustraction pour la section sélectionnée de chacun des signaux d'entrée pour chaque domaine de fréquence dans les transformées de Fourier des signaux d'entrée les composants de phase l'un vis-à-vis de l'autre de manière à fournir une valeur de différence de phase pour chaque composant de fréquence, et par
b4. le calcul pour chaque composant de fréquence pour l'ensemble des sections sélectionnées d'une somme vectorielle des valeurs de différence de phase correspondantes, et par
b5. le calcul de la grandeur de ladite somme vectorielle pour chaque composant de fréquence, de manière à fournir une mesure de la probabilité selon laquelle un composant de fréquence donné contribue à une crête dans la fonction de corrélation croisée des deux signaux d'entrée.

**2.** Procédé selon la revendication 1, dans lequel les signaux sont des signaux électromagnétiques.

**3.** Procédé selon l'une quelconque des revendications précédentes, comprenant une troisième étape de fourniture d'un deuxième filtre dans ledit au moins un filtre pour supprimer les fréquences qui ne possèdent pas une amplitude suffisante.

**4.** Procédé selon la revendication 3, dans lequel la troisième étape est conçue en utilisant un procédé comprenant : l'application d'un seuil numérique au produit des spectres des deux signaux d'entrée.

**5.** Procédé selon l'une quelconque des revendications précédentes, comprenant une quatrième étape de fourniture d'un troisième filtre dans ledit au moins un filtre pour supprimer les fréquences qui ne démontrent pas une progression de phase stable sur des fréquences adjacentes.

**6.** Procédé selon l'une quelconque des revendications précédentes, comprenant une cinquième étape de fourniture d'un quatrième filtre dans ledit au moins un filtre pour compenser les signaux d'entrée pour les effets de dispersion.

**7.** Appareil pour déterminer l'emplacement de la source d'un signal commun détecté dans deux signaux d'entrée qui sont fournis par deux détecteurs de signaux, comprenant un ordinateur intégrant :

a. des premiers moyens pour fournir au moins un filtre comprenant des moyens pour

a1. analyser la phase des composants de fréquence des signaux d'entrée dans le domaine de fréquence, et pour
a2. filtrer les signaux d'entrée dans le domaine de fréquence, et pour
a3. effectuer une corrélation croisée des signaux filtrés ;

b. des deuxièmes moyens pour fournir un premier filtre dans ledit au moins un filtre pour supprimer les fréquences au sein des signaux d'entrée qui ne démontrent pas un degré suffisant de cohérence de phase, les deuxièmes moyens étant **caractérisés par**

b1. des moyens pour sélectionner au moins une section correspondante de chacun des deux signaux d'entrée, et par
b2. des moyens pour transformer la section sélectionnée de chacun des signaux d'entrée en domaine de fréquence en calculant une transformée de Fourier, et par
b3. des moyens pour soustraire pour la section sélectionnée de chacun des signaux d'entrée pour chaque composant de fréquence dans les transformées de Fourier des signaux d'entrée les composants de phase l'un vis à vis de l'autre de manière à produire une valeur de différence de phase pour chaque composant de fréquence, et par
b4. des moyens pour calculer pour chaque composant de fréquence pour l'ensemble des sections sélectionnées une somme vectorielle des valeurs de différence de phase correspondantes, et par
b5. des moyens pour calculer la grandeur de ladite somme vectorielle pour chaque composant de fréquence, de manière à fournir une mesure de la probabilité selon laquelle un composant de fréquence donné contribue à une crête au sein de la fonction de corrélation croisée des deux signaux d'entrée.

**8.** Appareil selon la revendication 7, dans lequel les signaux sont des signaux électromagnétiques.

**9.** Appareil selon les revendications 7 ou 8, dans lequel au moins un filtre comprend un deuxième filtre pour supprimer les fréquences qui ne possèdent pas une amplitude suffisante.

**10.** Appareil selon la revendication 9, dans lequel le deuxième filtre est conçu en utilisant un procédé comprenant : l'application d'un seuil numérique au produit des spectres des deux signaux d'entrée.

**11.** Appareil selon l'une quelconque des revendications 7 à 10, dans lequel ledit au moins un filtre comprend un troisième filtre pour supprimer les fréquences qui ne démontrent pas une progression de phase stable sur des fréquences adjacentes.

**12.** Appareil selon l'une quelconque des revendications 7 à 11, dans lequel ledit au moins un filtre comprend un quatrième filtre pour compenser les signaux d'entrée pour les effets de dispersion.

**13.** Procédé pour générer un filtre de fréquence selon la revendication 10, dans lequel ledit filtre identifie des régions dans le spectre de fréquence d'une fonction de corrélation croisée qui peut probablement démontrer une phase corrélée entre des fréquences adjacentes au sein de sa transformée de Fourier.

**14.** Procédé pour calculer la temporisation entre deux signaux d'entrée en suivant la différence de phase entre les signaux comme une fonction de fréquence, en utilisant les filtres selon les revendications 1 à 6.

**15.** Procédé pour calculer des variations de temporisation entre deux signaux comme une fonction de fréquence en utilisant des techniques décrites dans les revendications 13 et 14.

**16.** Véhicule comprenant l'appareil selon l'une quelconque des revendications 7 à 12.

**17.** Embarcation comprenant l'appareil selon l'une quelconque des revendications 7 à 12.

**18.** Agencement pour déterminer des propriétés de transmission de signal dans un moyen comprenant l'appareil selon l'une quelconque des revendications 7 à 12.

**19.** Moteur comprenant l'appareil selon l'une quelconque des revendications 7 à 12.

**20.** Système d'identification d'image comprenant l'appareil selon l'une quelconque des revendications 7 à 12.

**21.** Appareil pour détecter et localiser des crêtes dans une conduite de transport de fluide comprenant l'appareil selon l'une quelconque des revendications 7 à 12.

Fig.1.

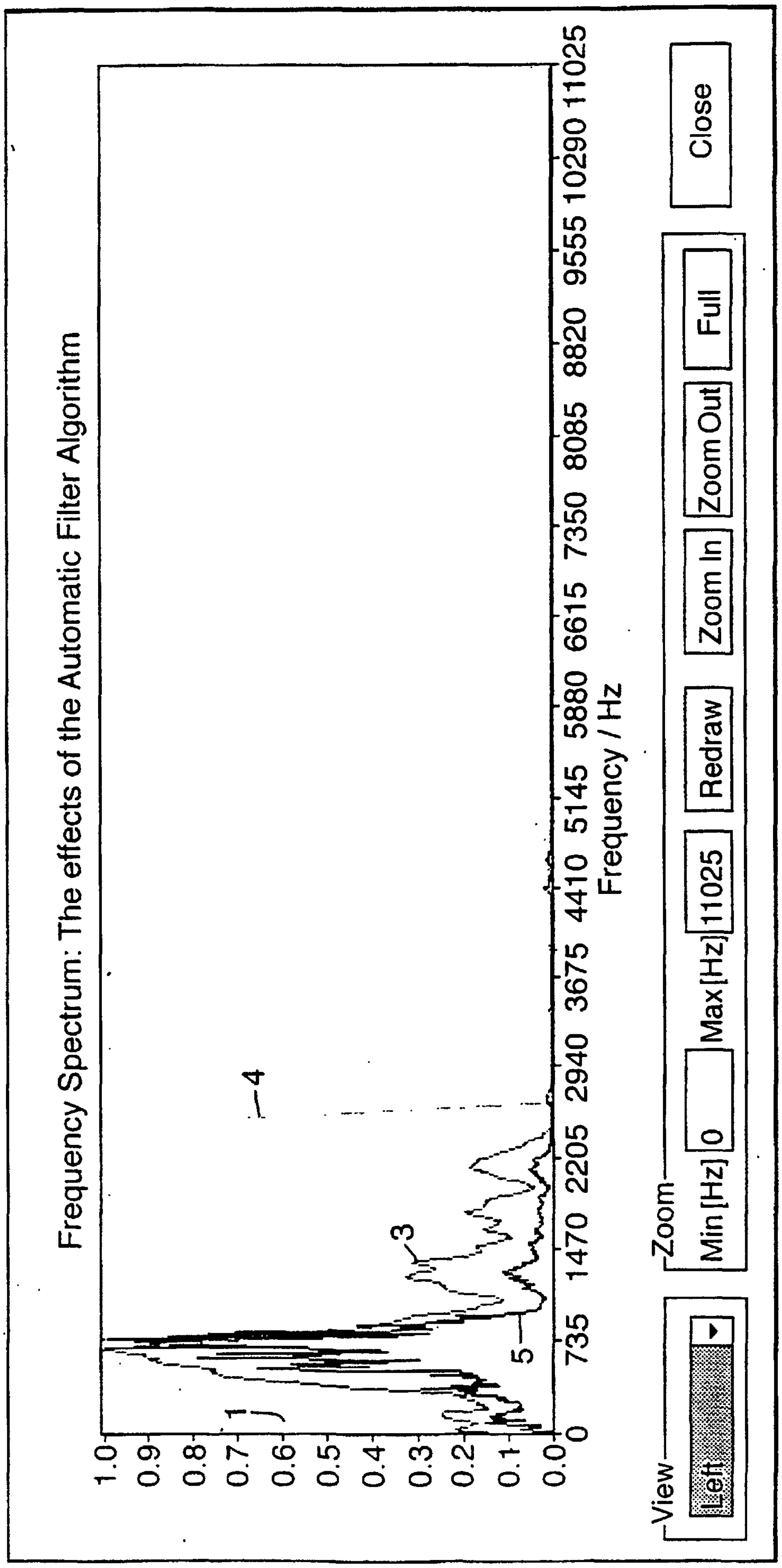
Frequency Spectrum: The effects of the Automatic Filter Algorithm
1.0
0.9
0.8
0.7
0.6
0.5
0.4
0.3
0.2
0.1
0.0
0
735
1470
2205
2940
3675
4410
5145
5880
6615
7350
8085
8820
9555
10290
11025
Frequency / Hz
1
3
4
5
View
Left
Zoom
Min [Hz]
0
Max [Hz]
11025
Redraw
Zoom In
Zoom Out
Full
Close

Fig.2.

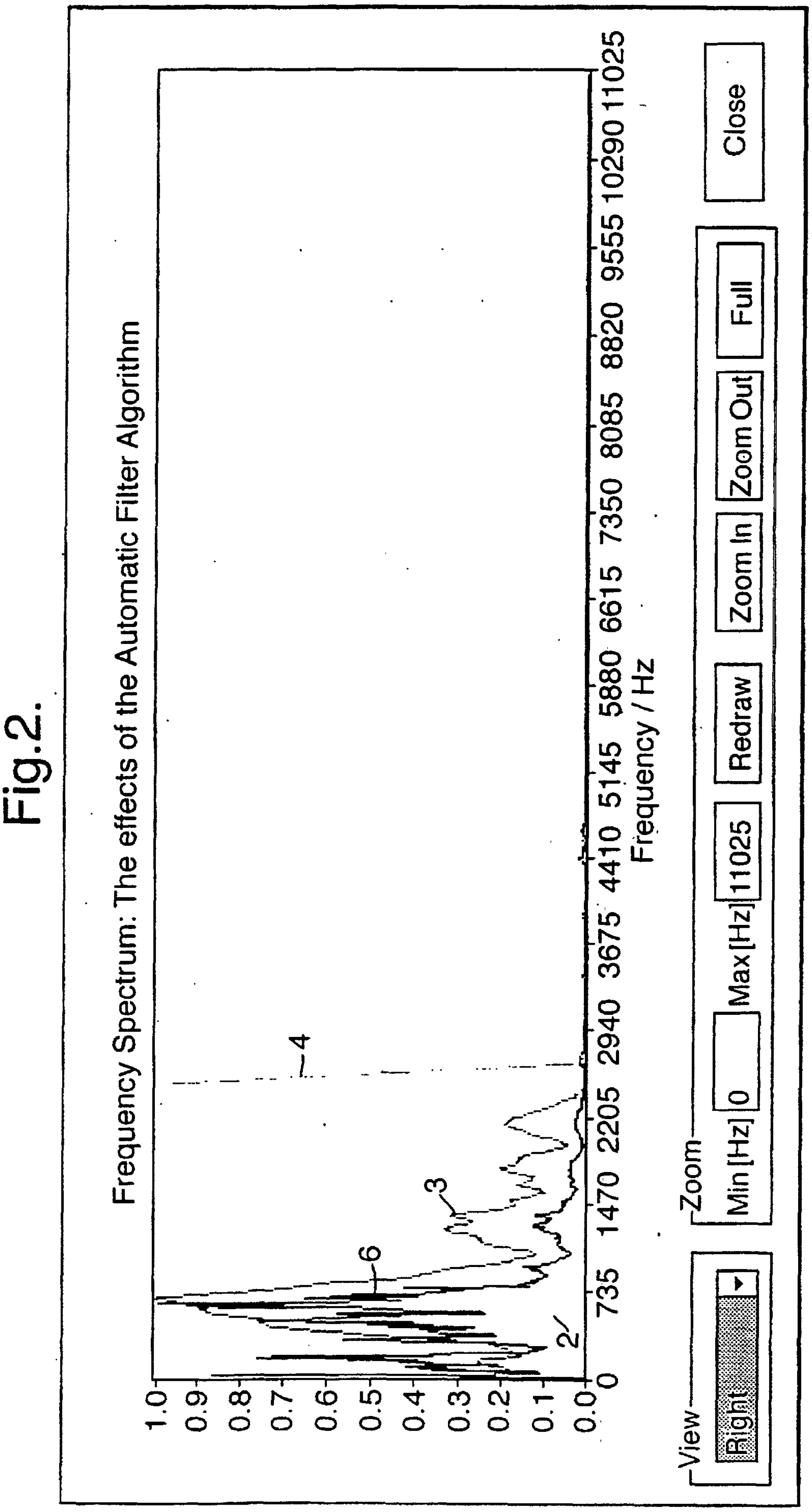
Frequency Spectrum: The effects of the Automatic Filter Algorithm
1.0
0.9
0.8
0.7
0.6
0.5
0.4
0.3
0.2
0.1
0.0
0
735
1470
2205
2940
3675
4410
5145
5880
6615
7350
8085
8820
9555
10290
11025
Frequency / Hz
2
3
4
6
View
Right
Zoom
Min [Hz]
0
Max [Hz]
11025
Redraw
Zoom In
Zoom Out
Full
Close

Fig.3.

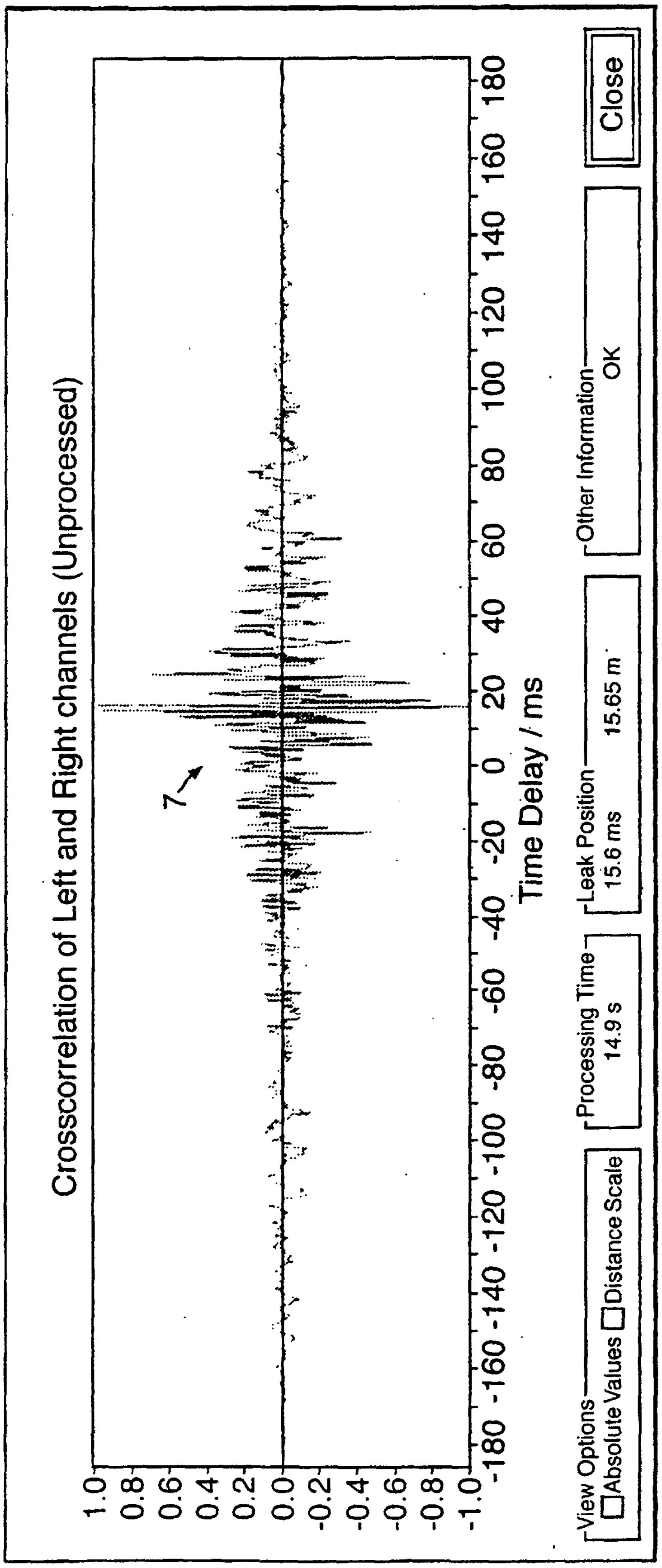
Crosscorrelation of Left and Right channels (Unprocessed)
1.0
0.8
0.6
0.4
0.2
0.0
-0.2
-0.4
-0.6
-0.8
-1.0
-180 -160 -140 -120 -100 -80 -60 -40 -20 0 20 40 60 80 100 120 140 160 180
Time Delay / ms
7
View Options
Absolute Values
Distance Scale
Processing Time
14.9 s
Leak Position
15.6 ms
15.65 m
Other Information
OK
Close

Fig.4.

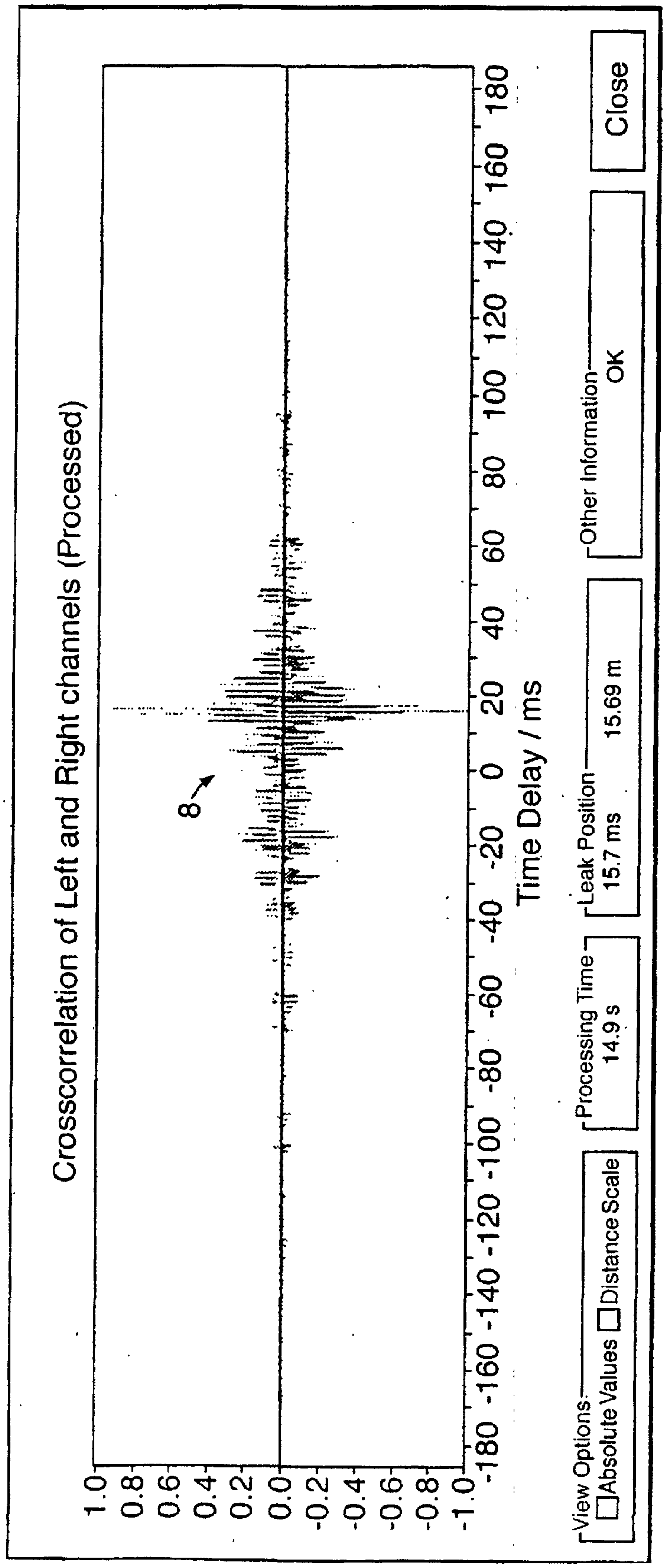

Crosscorrelation of Left and Right channels (Processed)
1.0
0.8
0.6
0.4
0.2
0.0
-0.2
-0.4
-0.6
-0.8
-1.0
-180 -160 -140 -120 -100 -80 -60 -40 -20 0 20 40 60 80 100 120 140 160 180
Time Delay / ms
8
View Options
Absolute Values
Distance Scale
Processing Time
14.9 s
Leak Position
15.7 ms
15.69 m
Other Information
OK
Close

Fig.5a.

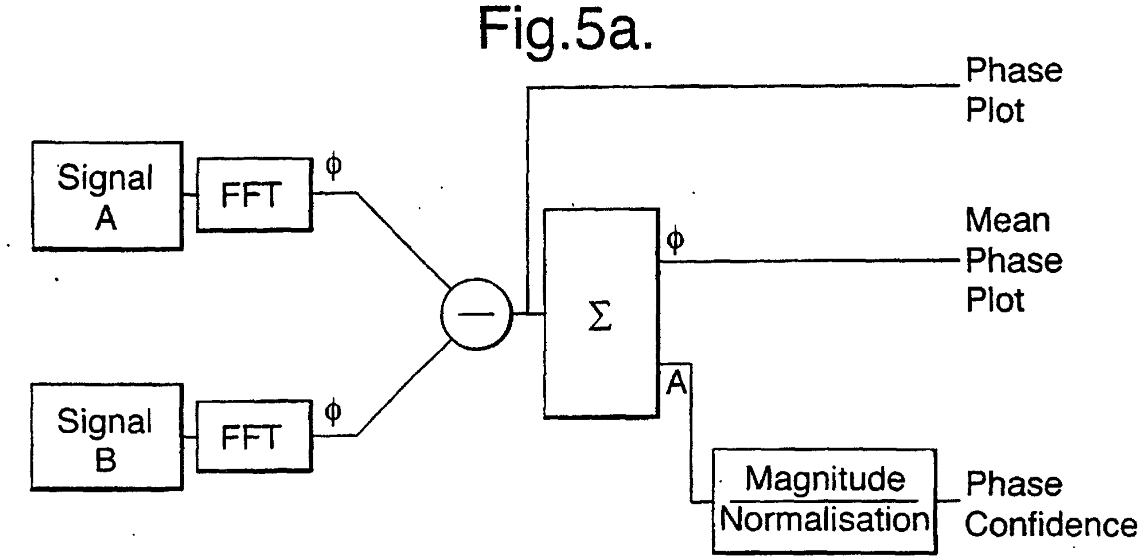
Signal
A
FFT
ϕ
Signal
B
FFT
ϕ
Σ
ϕ
A
Phase
Plot
Mean
Phase
Plot
Magnitude
Normalisation
Phase
Confidence

Fig.5b.

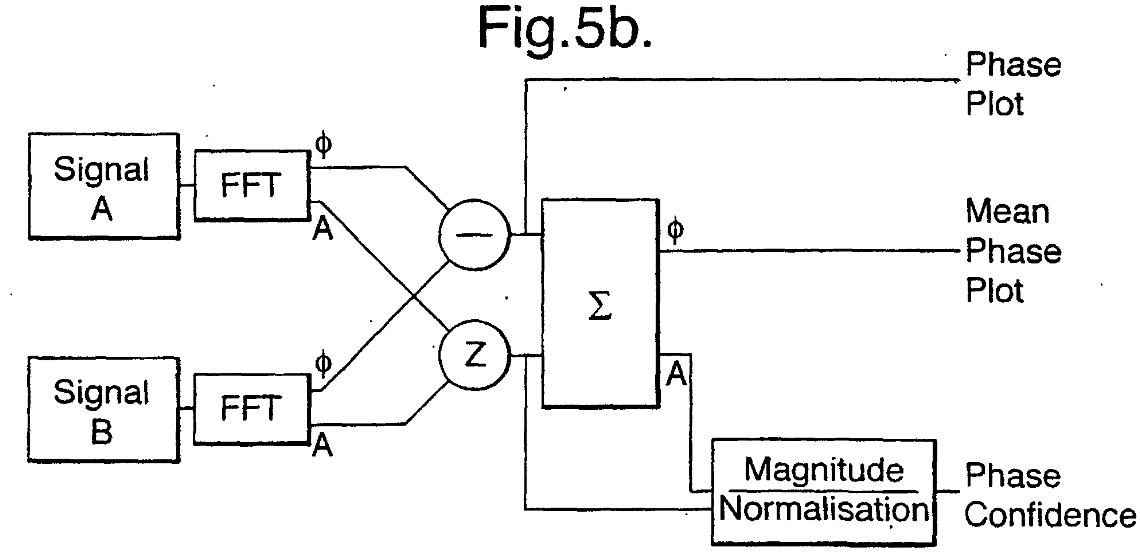
Signal
A
FFT
ϕ
A
Signal
B
FFT
ϕ
A
Z
Σ
ϕ
A
Phase
Plot
Mean
Phase
Plot
Magnitude
Normalisation
Phase
Confidence

Fig.5c.

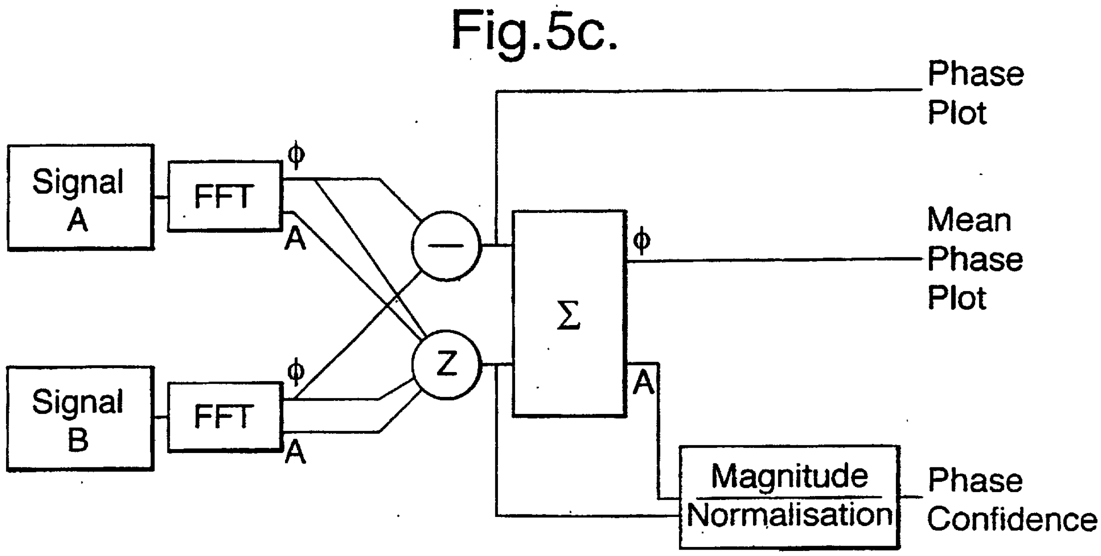
Signal A
FFT
ϕ
A
Signal B
FFT
ϕ
A
—
Z
Σ
ϕ
A
Magnitude
Normalisation
Phase Plot
Mean Phase Plot
Phase Confidence

Fig.6a.

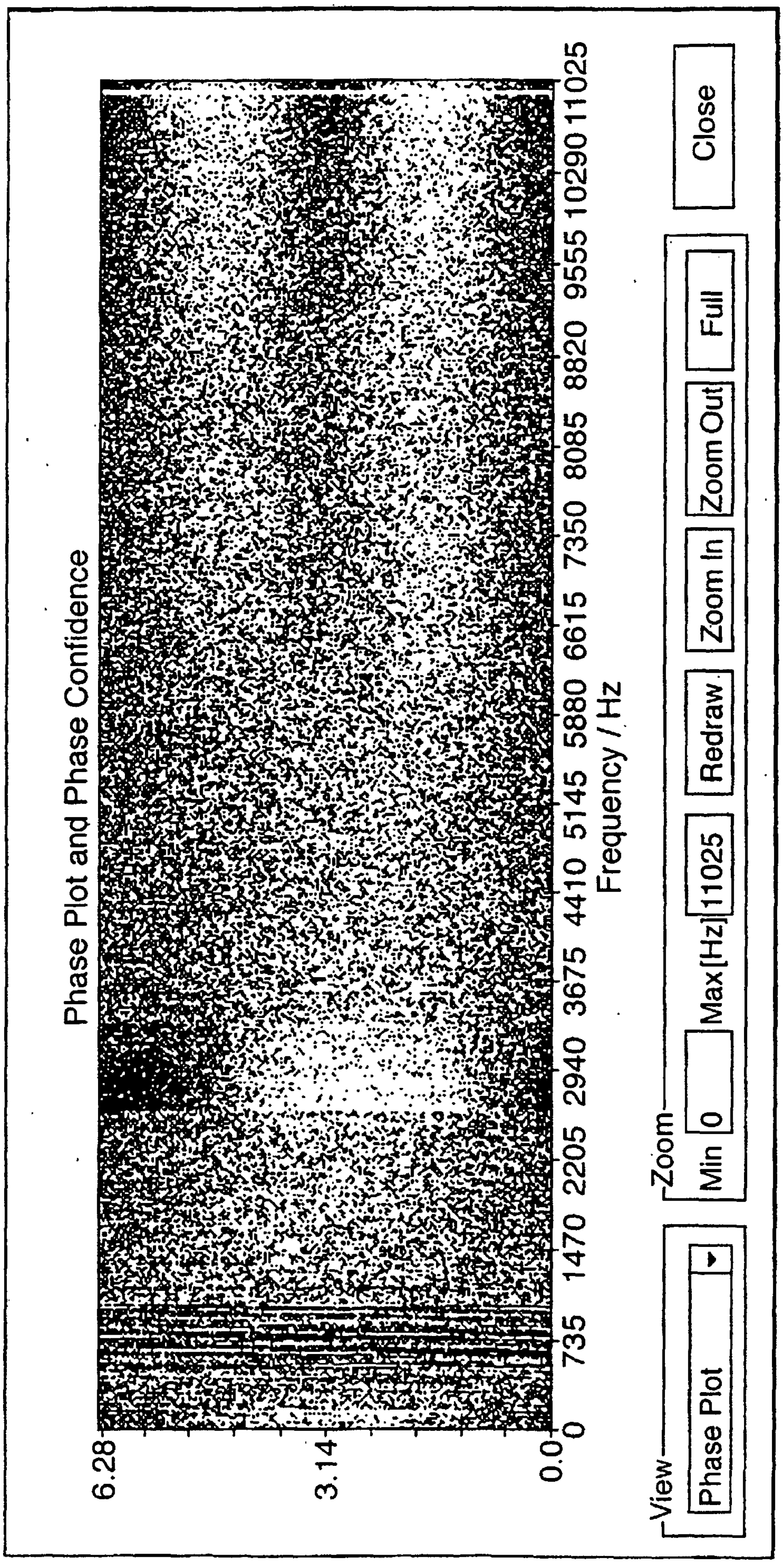
Phase Plot and Phase Confidence
6.28
3.14
0.0
0
735
1470
2205
2940
3675
4410
5145
5880
6615
7350
8085
8820
9555
10290
11025
Frequency / Hz
View
Phase Plot
Zoom
Min
0
Max [Hz]
11025
Redraw
Zoom In
Zoom Out
Full
Close

Fig.6b.

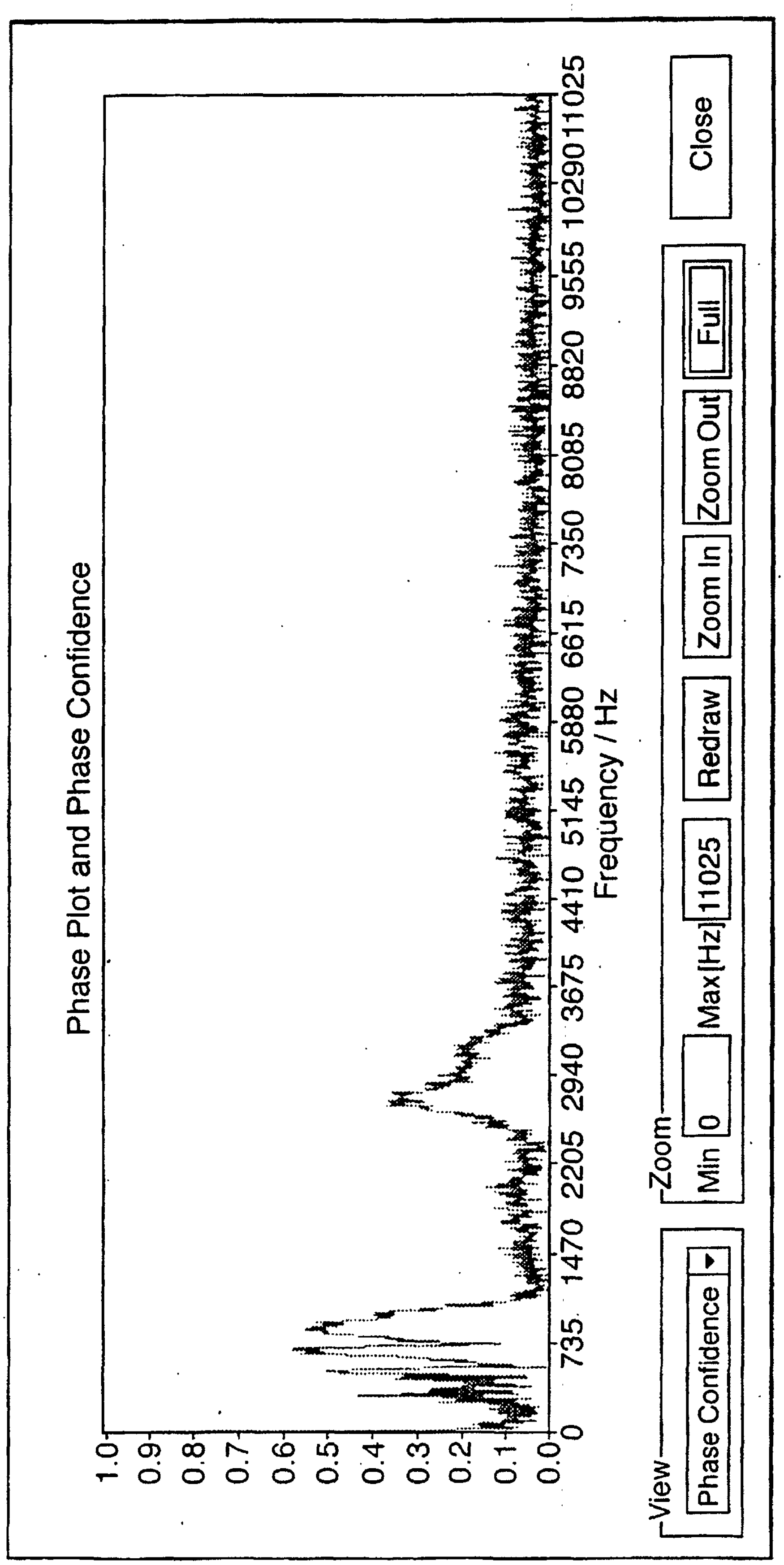
Phase Plot and Phase Confidence
1.0
0.9
0.8
0.7
0.6
0.5
0.4
0.3
0.2
0.1
0.0
0
735
1470
2205
2940
3675
4410
5145
5880
6615
7350
8085
8820
9555
10290
11025
Frequency / Hz
View
Phase Confidence
Zoom
Min 0
Max[Hz] 11025
Redraw
Zoom In
Zoom Out
Full
Close

Fig.6c.

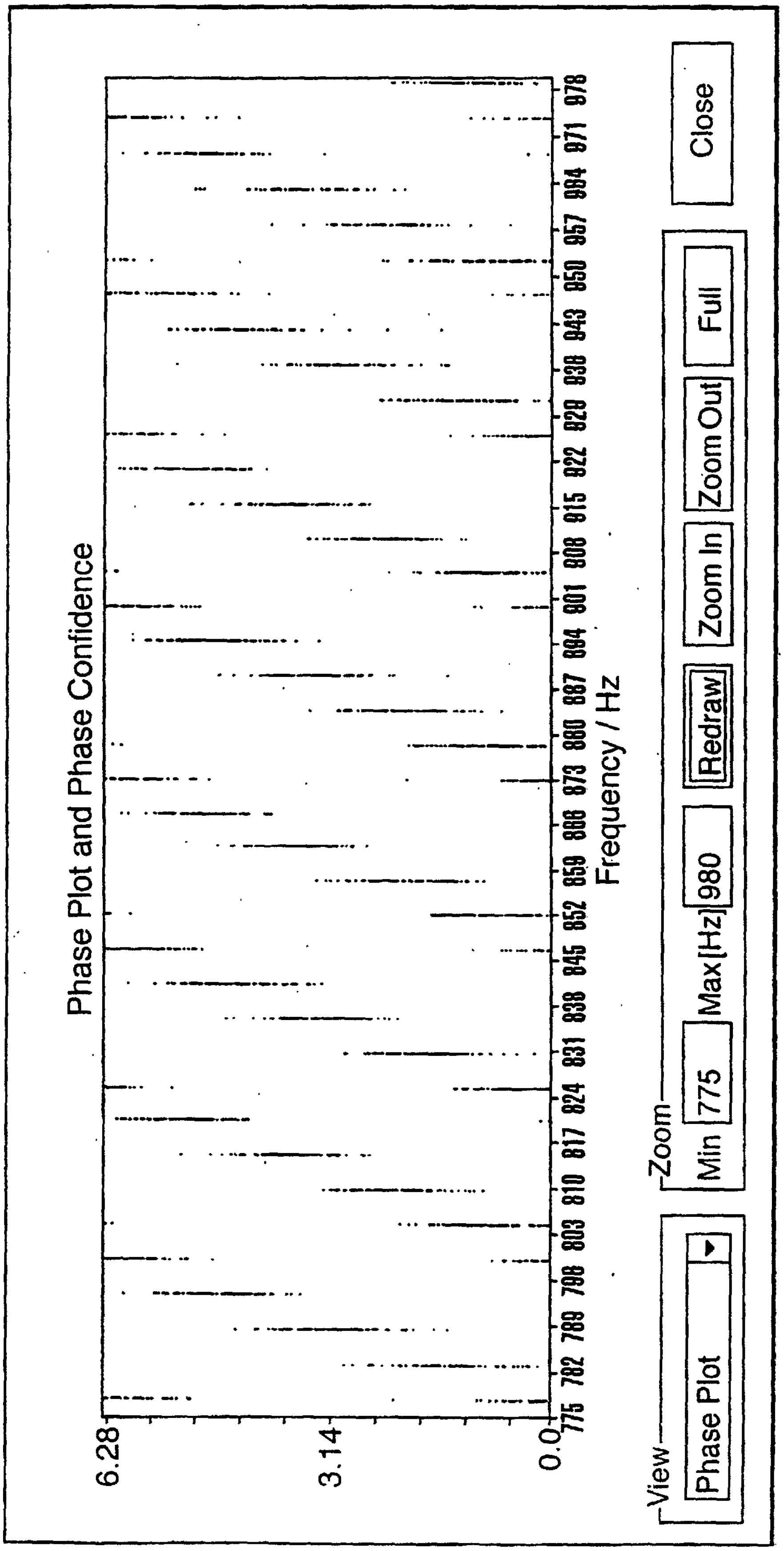
Phase Plot and Phase Confidence
6.28
3.14
0.0
775 782 789 796 803 810 817 824 831 838 845 852 859 866 873 880 887 894 901 908 915 922 929 936 943 950 957 964 971 978
Frequency / Hz
View
Phase Plot
Zoom
Min 775
Max[Hz] 980
Redraw
Zoom In
Zoom Out
Full
Close

Fig.7.

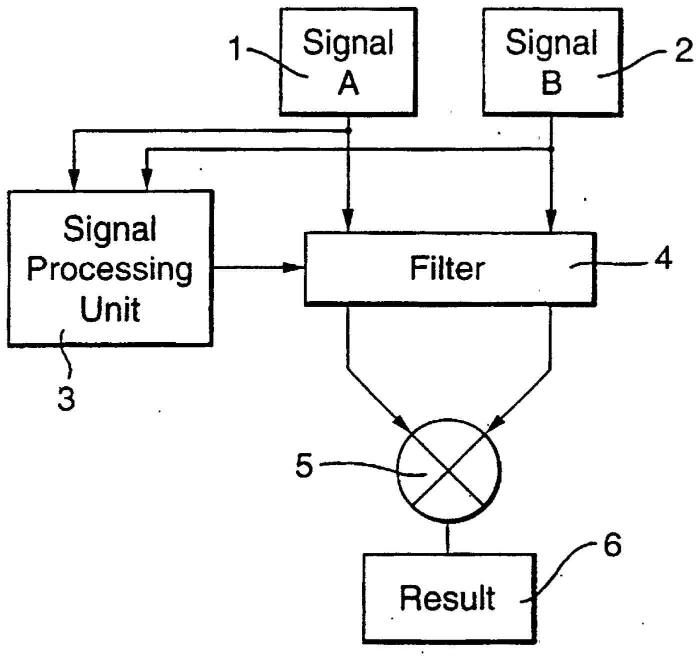
Signal
A
Signal
B
1
2
Signal
Processing
Unit
3
Filter
4
5
Result
6

Fig.8.

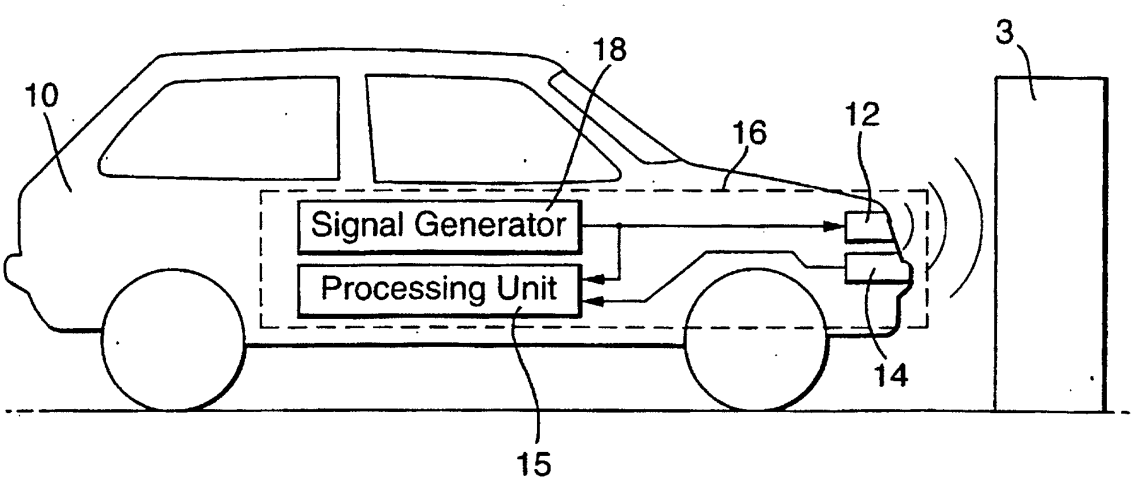
10
18
3
16
12
Signal Generator
Processing Unit
14
15

Fig.9.

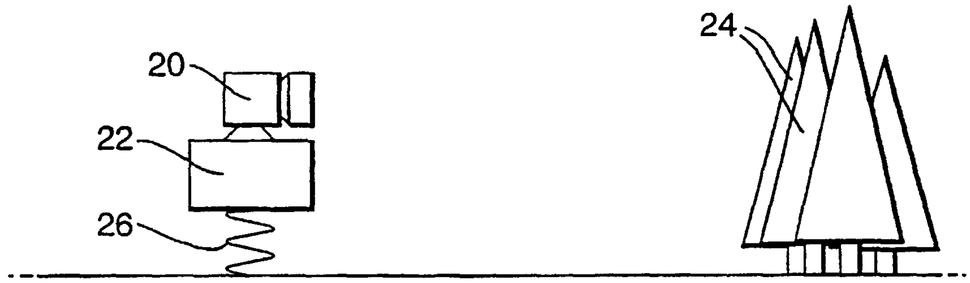


Fig.10.

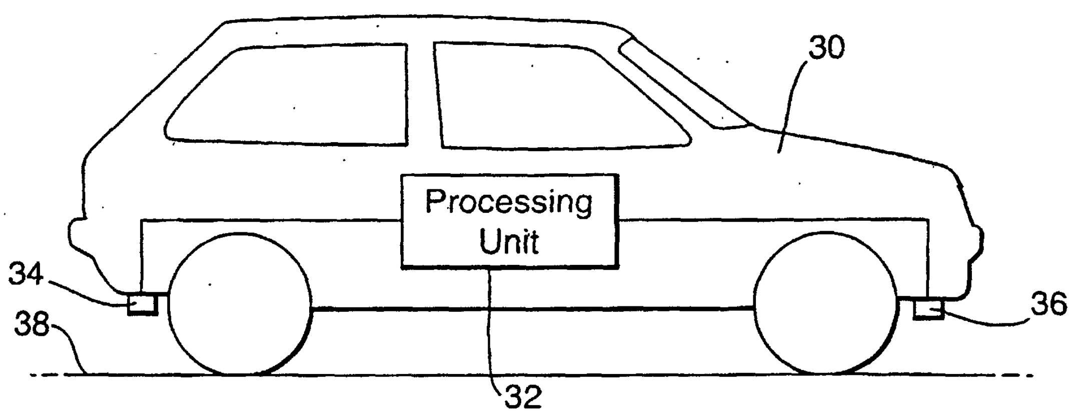

Fig.11.

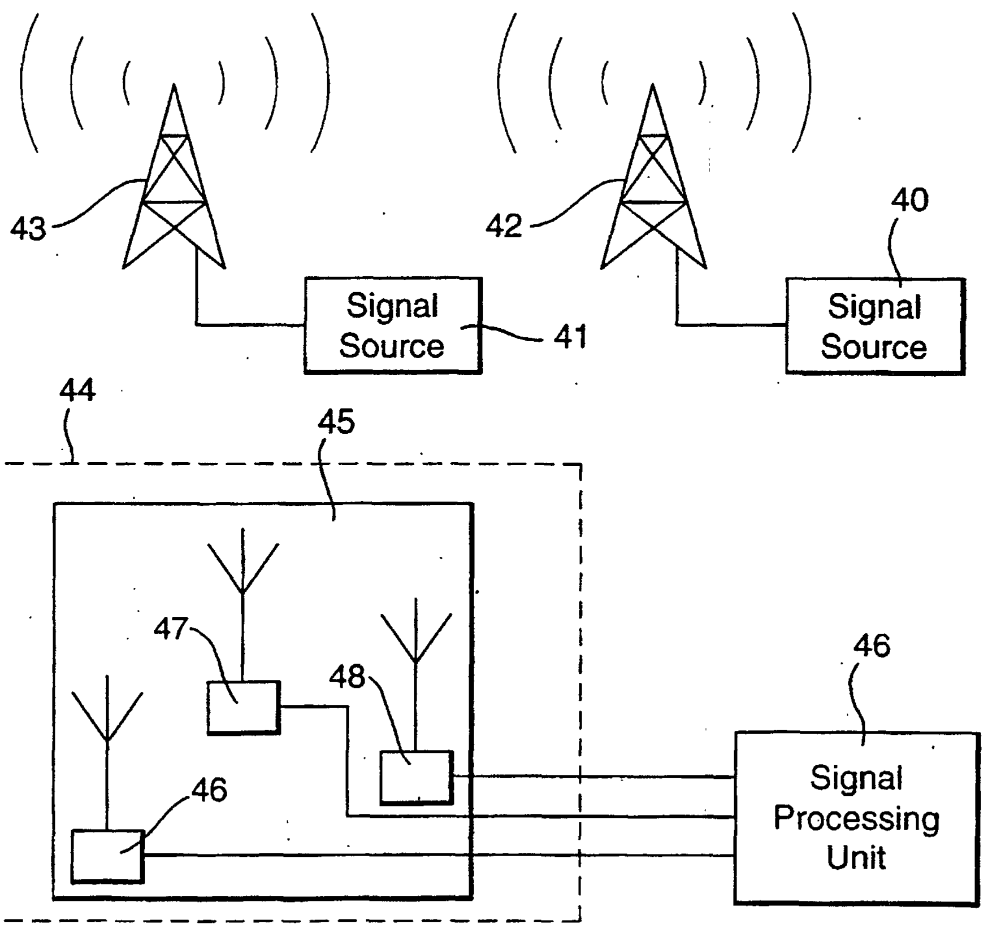
43
42
40
Signal
Source
41
Signal
Source
44
45
47
48
46
46
Signal
Processing
Unit

Fig.12.

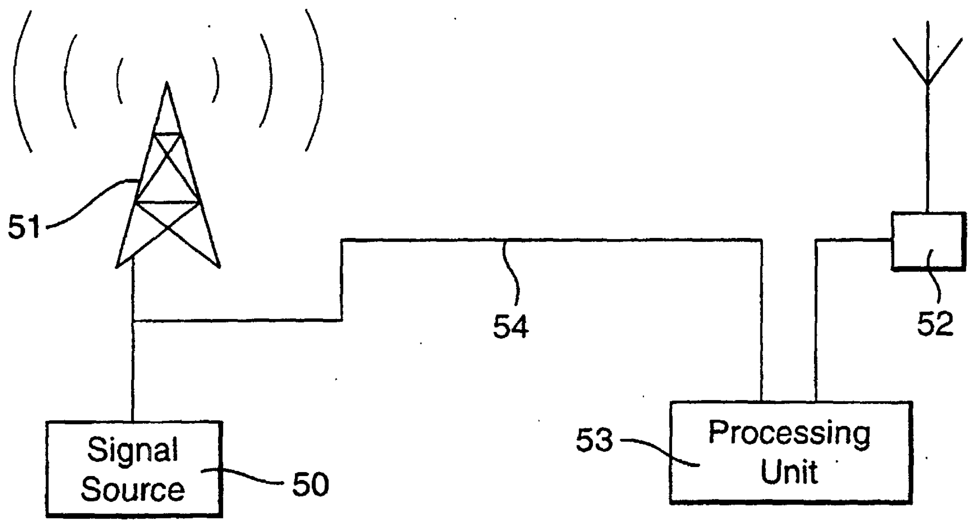
51
54
52
Signal
Source
50
53
Processing
Unit

Fig.13.

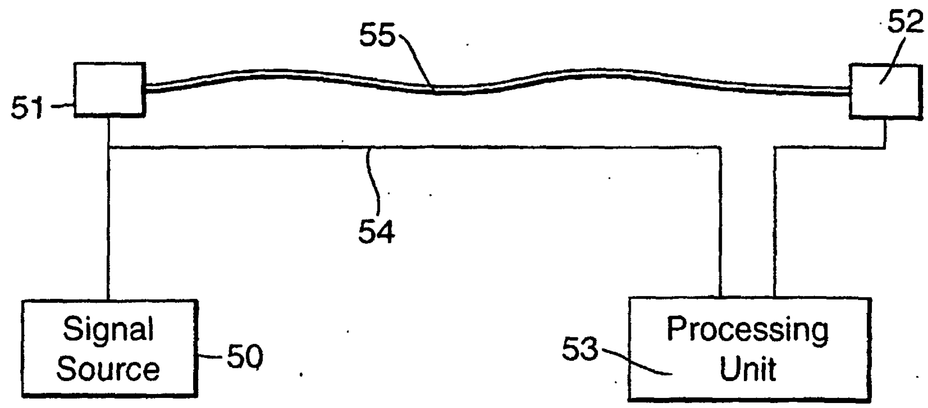
55
52
51
54
Signal
Source
50
53
Processing
Unit

Fig.14.

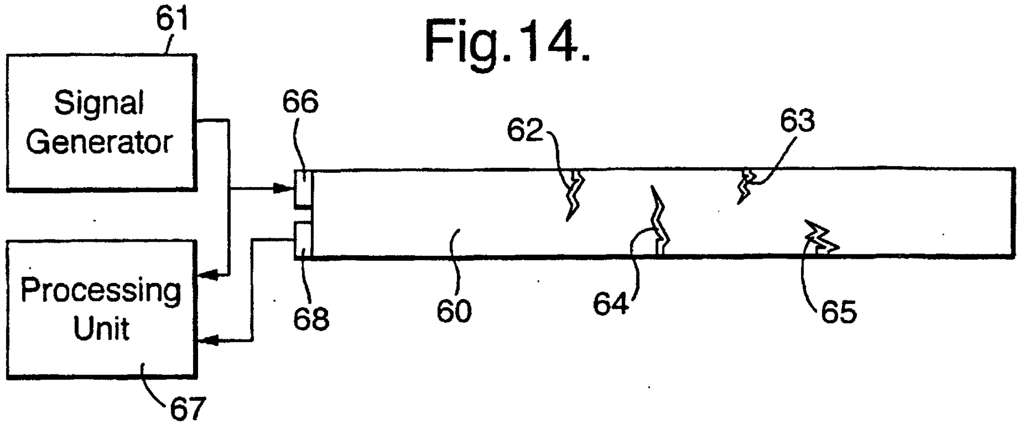


Fig.15.

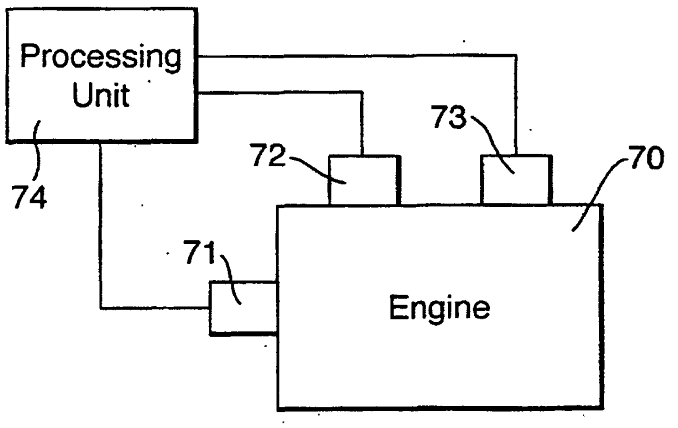


Fig.16.